(19) Europäisches Patentamt
European Patent Office
Office européen des brevets

(11) **EP 4 238 893 A1**

(12) **EUROPEAN PATENT APPLICATION**
published in accordance with Art. 153(4) EPC

(43) Date of publication:
**06.09.2023 Bulletin 2023/36**

(21) Application number: **21893798.5**

(22) Date of filing: **10.11.2021**

(51) International Patent Classification (IPC):
**B65G 1/04** (2006.01)          **B65G 1/137** (2006.01)
**B65G 1/14** (2006.01)

(86) International application number:
**PCT/CN2021/129699**

(87) International publication number:
**WO 2022/105651 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.11.2020 CN 202011312567**

(71) Applicant: **Hai Robotics Co., Ltd.
Shenzhen, Guangdong 518000 (CN)**

(72) Inventors:
• **YU, Runfang
  Shenzhen, Guangdong 518000 (CN)**
• **AI, Xin
  Shenzhen, Guangdong 518000 (CN)**

(74) Representative: **Nederlandsch Octrooibureau
P.O. Box 29720
2502 LS The Hague (NL)**

(54) **SPACE ALLOCATION METHOD, METHOD AND DEVICE FOR STORING GOODS, ROBOT AND WAREHOUSING SYSTEM**

(57)  Embodiments of the present disclosure provide a space allocation method and apparatus, a goods storage method and apparatus, a robot, and a warehousing system, where the space allocation method includes: determining, according to a space property of an unoccupied space of a goods storage space and a required space of to-be-stored goods, a first storage space adapted to the required space from the unoccupied space; allocating the first storage space to the to-be-stored goods; and sending a first storage instruction to a first robot, where the first storage instruction includes information about the first storage space. In this way, a proper space is dynamically allocated to goods according to a requirement and a space property, space utilization of a warehousing system is improved, and warehousing costs are reduced.

Determine, according to a space property of an unoccupied space of a goods storage space and a required space of to-be-stored goods, a first storage space adapted to the required space from the unoccupied space — S601

Allocate the first storage space to the to-be-stored goods — S602

Send a first storage instruction to a first robot — S603

FIG. 6

EP 4 238 893 A1

**Description**

**CROSS-REFERENCE TO RELATED APPLICATIONS**

The present disclosure claims priority to Chinese Patent Application No. 202011312567.4, filed with the China National Intellectual Property Administration on November 20, 2020 and entitled "SPACE ALLOCATION METHOD, GOODS STORAGE METHOD AND APPARATUS, ROBOT, AND WAREHOUSING SYSTEM", which is incorporated herein by reference in its entirety.

**TECHNICAL FIELD**

The present disclosure relates to the field of intelligent warehousing technologies, and in particular, to a space allocation method, a goods storage method and apparatus, a robot, and a warehousing system.

**BACKGROUND**

An intelligent warehousing system based on a warehousing robot uses an intelligent operating system, and implements automated retrieval and storage of goods through system instructions; in addition, the system can operate 24 hours a day without interruption to replace manual management and operation, and thus improves the efficiency of warehousing and has been widely applied and favored.

A storage space used by an existing intelligent warehousing system is a static storage space, that is, a physical space occupied by each storage space is fixed. Correspondingly, a size of a storage space in which each box is stored is the same. Therefore, a quantity and a position of a storage space corresponding to the warehousing system are fixed, and a quantity and a size of boxes that can be stored are also limited. In addition, a fixed storage space is used, thus a storage space of a warehouse cannot be fully used, space utilization is relatively low, and corresponding warehousing costs are relatively high.

**SUMMARY**

The present disclosure provides a space allocation method and apparatus, a goods storage method and apparatus, a robot, and a warehousing system, so as to dynamically allocate a proper storage space to goods according to a space requirement of the goods and a property of an unoccupied space, thereby improving utilization of a storage space of the warehousing system and reducing warehousing costs.

According to a first aspect, an embodiment of the present disclosure provides a space allocation method, where the method includes:
determining, according to a space property of an unoccupied space of a goods storage space and a required space of to-be-stored goods, a first storage space adapted to the required space from the unoccupied space; allocating the first storage space to the to-be-stored goods; and sending a first storage instruction to a first robot, where the first storage instruction includes information about the first storage space.

Optionally, the space property includes one or more of the following: a distance from a workstation, a distance from an alley entrance, a number of layer on a shelf, a space occupancy rate of the shelf, a continuous space occupancy rate of the shelf, and a space heat.

Optionally, the determining, according to a space property of an unoccupied space of a goods storage space and a required space of to-be-stored goods, a first storage space adapted to the required space from the unoccupied space includes: determining a space score of the unoccupied space according to the space property of the unoccupied space; and determining, according to the score of the unoccupied space and the required space, the first storage space adapted to the required space from the unoccupied space.

Optionally, the determining, according to a space property of an unoccupied space of a goods storage space and a required space of to-be-stored goods, a first storage space adapted to the required space from the unoccupied space includes: determining, according to a heat of the to-be-stored goods, the space property of the unoccupied space, and the required space, the first storage space adapted to the required space from the unoccupied space.

Optionally, the determining, according to a heat of the to-be-stored goods, the space property of the unoccupied space, and the required space, the first storage space adapted to the required space from the unoccupied space includes: determining a target storage region according to the heat of the to-be-stored goods; and determining, according to the space property of the unoccupied space and the required space, the first storage space adapted to the required space from an unoccupied space of the target storage region.

Optionally, the determining, according to a heat of the to-be-stored goods, the space property of the unoccupied space, and the required space, the first storage space adapted to the required space from the unoccupied space includes: determining, according to the space property of the unoccupied space and the required space, at least two second storage spaces adapted to the required space from the unoccupied space; and determining the first storage space from the at least two second storage spaces according to the heat of the to-be-stored goods.

Optionally, the determining, according to a heat of the to-be-stored goods, the space property of the unoccupied space, and the required space, the first storage space adapted to the required space from the unoccupied space includes: determining one or more target unoccupied spaces that meet the required space; calculating the heat of the to-be-stored goods; calculating a space score of the target unoccupied space according to the space property; and determining the first storage space according to a result of matching the heat of the to-be-stored goods with the space score.

Optionally, the determining the first storage space according to a result of matching the heat of the to-be-stored goods with the space score includes: calculating a heat ranking percentage of the heat of the to-be-stored goods in all goods stored in the goods storage space; determining a score ranking percentage of each target unoccupied space according to the space score of each target unoccupied space; and determining the first storage space according to the heat ranking percentage and the score ranking percentage of each target unoccupied space.

Optionally, the determining the first storage space according to the heat ranking percentage and the score ranking percentage of each target unoccupied space includes: determining the target unoccupied space whose score ranking percentage has the smallest absolute value of a difference from the heat ranking percentage as the first storage space.

Optionally, the determining, according to a heat of the to-be-stored goods, the space property of the unoccupied space, and the required space, the first storage space adapted to the required space from the unoccupied space includes: calculating the heat of the to-be-stored goods; calculating a space score of the unoccupied space according to the space property; determining one or more target unoccupied spaces according to a result of matching the heat of the to-be-stored goods with the space score; and determining the first storage space adapted to the required space from the target unoccupied space.

Optionally, the heat of the to-be-stored goods is determined according to a type of the to-be-stored goods and/or an access frequency of the to-be-stored goods.

Optionally, the to-be-stored goods are to-be-stored boxes, the to-be-stored boxes include at least two types of articles, and the heat of the to-be-stored goods is determined according to an article heat of each article of the to-be-stored box.

Optionally, before the determining a first storage space, the method further includes: performing standardization processing on the heat of the to-be-stored goods and the space score; and performing matching according to the heat of the to-be-stored goods and the space score after standardization processing, to obtain a matching result.

Optionally, the goods storage space includes a first unoccupied space and/or a first occupied space, and the first occupied space is a space in which goods have been placed in a goods access direction.

Optionally, the goods storage space includes a second unoccupied space and/or a second occupied space; and the second unoccupied space includes a space that is not occupied by goods in a goods access direction.

Optionally, the determining, according to a space property of an unoccupied space of a goods storage space and a required space, a first storage space adapted to the required space from the unoccupied space includes: determining, according to the space property of the unoccupied space in the goods storage space and the required space, a first storage space adapted to the required space from the unoccupied space and an orientation of the to-be-stored goods; and after the determining a first storage space and an orientation of the to-be-stored goods, the method further includes: generating the first storage instruction according to the orientation of the to-be-stored goods and the information about the first storage space.

Optionally, the first robot includes a mobile chassis, a storage shelf, a carrying device, and a lifting/lowering assembly; the storage shelf, the carrying device, and the lifting/lowering assembly are installed on the mobile chassis, to store the to-be-stored goods by using the storage shelf, so as to carry the to-be-stored goods to a position corresponding to the first storage space according to the first storage instruction.

Optionally, the carrying device includes one or more of the following: a telescopic arm assembly, a suction cup, and a robotic arm.

Optionally, the carrying device includes a supporting plate and a steering structure, and the steering structure is configured to change an orientation of goods placed on the supporting plate.

According to a second aspect, an embodiment of the present disclosure further provides a goods storage method, where the method includes:

obtaining a first storage instruction, where the first storage instruction includes information about a first storage space, the first storage space is a space allocated to to-be-stored goods, and the first storage space is a space that is determined, according to a space property of an unoccupied space of a goods storage space and a required space of the to-be-stored goods, from the unoccupied space and that is adapted to the required space; and storing the to-be-stored goods in the first storage space according to the first storage instruction.

According to a third aspect, an embodiment of the present disclosure further provides a space allocation apparatus, where the apparatus includes:

a storage space determining module, configured to determine, according to a space property of an unoccupied space of a goods storage space and a required space of to-be-stored goods, a first storage space adapted to the required space from the unoccupied space; a storage space allocation module, configured to allocate the first storage space to the to-be-stored goods; and a storage instruction sending module, configured to send a first storage instruction to a first robot, where the first storage instruction includes information about the first storage space.

According to a fourth aspect, an embodiment of the present disclosure further provides a goods storage apparatus, where the apparatus includes:

a storage instruction obtaining module, configured to obtain a first storage instruction, where the first storage instruction includes information about a first storage space, the first storage space is a space allocated to to-be-stored goods, and the first storage space is a space that is determined, according to a space property of an unoccupied space of a goods storage space and a required space of the to-be-stored goods, from the unoccupied space and that is adapted to the required space; and a goods storage module, configured to store the to-be-stored goods in the first storage space according to the first storage instruction.

According to a fifth aspect, an embodiment of the present disclosure further provides a goods storage apparatus, including a memory and at least one processor, where the memory stores computer executable instructions; and the at least one processor executes the computer executable instructions stored in the memory, so that the at least one processor performs the space allocation method provided in any embodiment corresponding to the first aspect of the present disclosure.

According to a sixth aspect, an embodiment of the present disclosure further provides a robot, including a memory and at least one processor, where the memory stores computer executable instructions; and the at least one processor executes the computer executable instructions stored in the memory, so that the at least one processor performs the goods storage method provided in any embodiment corresponding to the second aspect of the present disclosure.

According to a seventh aspect, an embodiment of the present disclosure further provides a warehousing system, including the space allocation apparatus provided in any embodiment of the fifth aspect of the present disclosure, and/or the robot provided in any embodiment of the sixth aspect of the present disclosure.

According to an eighth aspect, an embodiment of the present disclosure further provides a computer readable storage medium. The computer readable storage medium stores computer executable instructions. When the processor executes the computer executable instructions, the space allocation method provided in any embodiment corresponding to the first aspect of the present disclosure is implemented, and/or the goods storage method provided in any embodiment corresponding to the second aspect of the present disclosure is implemented.

According to a ninth aspect, an embodiment of the present disclosure further provides a computer program product, including a computer program. When the computer program is executed by a processor, the space allocation method provided in any embodiment corresponding to the first aspect of the present disclosure is implemented, and/or the goods storage method provided in any embodiment corresponding to the second aspect of the present disclosure is implemented.

According to the space allocation method and apparatus, the goods storage method and apparatus, the robot, and the warehousing system that are provided in the embodiments of the present disclosure, a storage space adapted to a required space is determined from an unoccupied space according to the required space of to-be-stored goods and a space property of each unoccupied space of a goods storage space, so as to store the to-be-stored goods by using the determined storage space, thereby implementing a concept of dynamically allocating a space to goods, improving space utilization of a warehouse, reducing warehousing costs, and improving intelligence of the warehousing system.

**BRIEF DESCRIPTION OF THE DRAWINGS**

The accompanying drawings here, which are incorporated into the specification and constitute a part of the specification, illustrate embodiments that conform to the present disclosure and are used together with the specification to explain the principles of the present disclosure.

FIG. 1A is a schematic diagram of a storage situation in a one-dimensional configuration manner according to an embodiment of the present disclosure;
FIG. 1B is a schematic diagram of a storage situation after goods are placed according to an embodiment shown in FIG. 1A of the present disclosure;
FIG. 1C is a schematic diagram of a storage situation in a two-dimensional configuration manner according to an embodiment of the present disclosure;
FIG. 1D is a schematic diagram of a storage situation after goods are placed according to an embodiment corresponding to FIG. 1C of the present disclosure;
FIG. 1E is a schematic diagram of a storage situation after goods are placed according to an embodiment corresponding to FIG. 1C of the present disclosure;
FIG. 1F is a schematic structural diagram of a robot according to an embodiment of the present disclosure;
FIG. 1G is a schematic structural diagram of a carrying device according to an embodiment shown in FIG. 1F of the present disclosure;
FIG. 1H is a structure of a robot and a carrying device according to an embodiment shown in FIG. 1F of the present disclosure;
FIG. 1I is a schematic structural diagram of a carrying device according to an embodiment shown in FIG. 1F of the present disclosure;
FIG. 1J is a schematic structural diagram of another carrying device according to an embodiment shown in FIG. 1F of the present disclosure;
FIG. 1K is a schematic structural diagram of another carrying device according to an embodiment shown in FIG. 1F of the present disclosure;
FIG. 1L is a schematic structural diagram of another carrying device according to an embodiment shown in FIG. 1F of the present disclosure;

FIG. 2 is an application scenario diagram of a space allocation method according to an embodiment of the present disclosure;

FIG. 3A is a flowchart of a space allocation method according to an embodiment of the present disclosure;

FIG. 3B is a schematic diagram of a storage situation according to an embodiment of the present disclosure;

FIG. 3C is a schematic diagram of a storage situation according to an embodiment of the present disclosure;

FIG. 4 is a flowchart of a space allocation method according to another embodiment of the present disclosure;

FIG. 5 is a flowchart of a space allocation method according to another embodiment of the present disclosure;

FIG. 6 is a flowchart of a space allocation method according to another embodiment of the present disclosure;

FIG. 7 is a flowchart of a space allocation method according to another embodiment of the present disclosure;

FIG. 8 is a flowchart of a space allocation method according to another embodiment of the present disclosure;

FIG. 9 is a flowchart of a space allocation method according to another embodiment of the present disclosure;

FIG. 10 is a flowchart of step S904 in the embodiment shown in FIG. 9 of the present disclosure;

FIG. 11 is a flowchart of a space allocation method according to another embodiment of the present disclosure;

FIG. 12 is a flowchart of a goods storage method according to an embodiment of the present disclosure;

FIG. 13 is a schematic structural diagram of a space allocation apparatus according to an embodiment of the present disclosure;

FIG. 14 is a schematic structural diagram of a goods storage apparatus according to an embodiment of the present disclosure;

FIG. 15 is a schematic structural diagram of a space allocation apparatus according to another embodiment of the present disclosure;

FIG. 16 is a schematic structural diagram of a robot according to an embodiment of the present disclosure; and

FIG. 17 is a schematic structural diagram of a warehousing system according to an embodiment of the present disclosure.

Specific embodiments of the present disclosure are shown by the above drawings, and more detailed description will be given below. These drawings and text description are not for limiting the scope of the concept of the present disclosure in any way, but for illustrating the concept of the present disclosure for those skilled in the art by referring to specific embodiments.

**DETAILED DESCRIPTION**

Example embodiments are described in detail herein, and examples of the example embodiments are presented in the accompanying drawings. When the following descriptions relate to the accompanying drawings, unless otherwise specified, same numbers in different accompanying drawings represent a same or similar element. The implementations described in the following exemplary embodiments do not represent all implementations consistent with the disclosure. On the contrary, they are merely examples of apparatuses and methods consistent with some aspects of the disclosure as detailed in the appended claims.

The technical solutions of the present disclosure and how the technical solutions solve the above technical problems are described in detail in the specific embodiments hereinafter. The following several specific embodiments may be combined with each other, and a same or similar concept or process may not be described repeatedly in some embodiments. The embodiments of the present disclosure are described below with reference to the accompanying drawings.

The application scenarios of the embodiments of the present disclosure are described below.

The present disclosure is applied to a scenario in which a goods storage space is dynamically configured, and the present disclosure provides a goods placement method for dynamically configuring a goods storage space that is different from a fixed storage place.

Dynamically configuring a goods storage space refers to: After a system determines to-be-stored goods, allocates, according to a size of the goods, a first storage space that matches the size of the goods from existing an unoccupied space, where the unoccupied space may be any size of space, and the unoccupied space does not include a fixed storage space that has been divided. The first storage space may hold the to-be-stored goods, and the fixed storage space refers to a preset storage space in a warehouse, and a position of the fixed storage space is fixed and a size thereof is determined.

A dynamic goods storage space may be a space for dynamically configuring a goods storage space.

For example, the dynamically configured goods storage space at least includes one-dimensional and/or two-dimensional configuration manner.

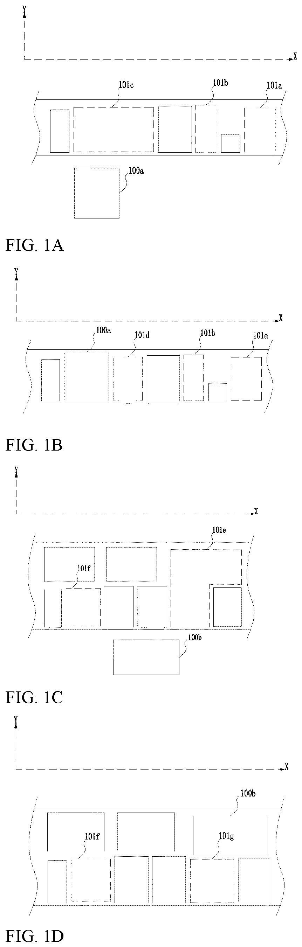

For example, FIG. 1A is a schematic diagram of a storage situation in a one-dimensional configuration manner according to an embodiment of the present disclosure. With reference to an X-Y coordinate system, the one-dimensional configuration manner means that goods at each layer in a goods storage space can be placed in only one row in a depth direction Y.

For example, FIG. 1C is a schematic diagram of a storage situation in a two-dimensional configuration manner according to an embodiment of the present disclosure. With reference to an X-Y coordinate system, the two-dimensional configuration manner means that goods at each layer in a goods storage space can be placed in one row, multiple rows, or one row and multiple rows in a depth direction Y. In other words, in the two-dimensional configuration manner, the goods in the goods storage space are allowed to be placed in multiple rows in the direction Y.

For example, FIG. 1A is a schematic diagram of a storage situation in a one-dimensional configuration manner according to an embodiment of the present disclosure. In the one-dimensional configuration manner, as shown in FIG. 1A, an unoccupied space in the foregoing dynamically configured goods storage space is the same as spaces 101a, 101b, and 101c in FIG. 1A. After a system acknowledges to-be-stored goods, that is, goods 100a, the system finds, from unoccupied spaces, that is, the space 101a, the space 101b, and the space 101c, a first storage space, such as the space 101c, that is most adapted to the goods 100a.

FIG. 1B is a schematic diagram of a storage situation after goods are placed according to an embodiment shown in FIG. 1A of the present disclosure. As shown in FIG. 1B, after goods 100 are placed, current unoccupied spaces become spaces 101a, 101b, and 101d, where the space 101d is newly defined unoccupied space after the space 101c is partially occupied by the goods 100.

FIG. 1C is a schematic diagram of a storage situation in a two-dimensional configuration manner according to an embodiment of the present disclosure. As shown in FIG. 1C, in the two-dimensional configuration manner, unoccupied spaces indicated on a shelf are similar to a space 101e and a space 101f. After the system acknowledges to-be-stored goods, that is, goods 100b, the system finds, from unoccupied spaces, that is, the space 101e and the space 101f, a first storage space, such as the space 101e, that is most adapted to the goods 100b.

FIG. 1D is a schematic diagram of a storage situation after goods are placed according to an embodiment corresponding to FIG. 1C of the present disclosure. As shown in FIG. 1D, after the goods 100b are placed, current unoccupied spaces become the space 101f and a space 101g. The space 101g is a newly defined unoccupied space after the space 101e is partially occupied by the goods 100b.

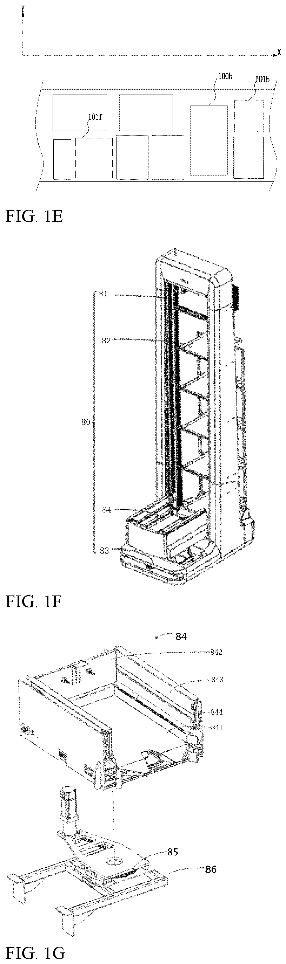

FIG. 1E is a schematic diagram of a storage situation after goods are placed according to an embodiment corresponding to FIG. 1C of the present disclosure. Referring to FIG. 1C, FIG. 1D, and FIG. 1E, it may be learned that orientations of the goods 100b in FIG. 1D and FIG. 1E are different when the goods 100b are placed, that is, the orientation of the goods 100b may be turned when being placed, that is, an orientation of to-be-stored goods may be changed when being placed. After the goods 100b are placed, current unoccupied spaces are the space 101f and a space 101h. The space 101h is a newly defined unoccupied space after the space 101e is partially occupied by the goods 100b.

For example, FIG. 1F is a schematic structural diagram of a robot according to an embodiment of the present disclosure; As shown in FIG. 1F, a robot 80 includes a mobile chassis 83, a storage shelf 82, a carrying device 84, and a lifting/lowering assembly 81. The storage shelf 82, the carrying device 84, and the lifting/lowering assembly 81 are all installed on the mobile chassis 83, and several storage units are disposed on the storage shelf 82. The lifting/lowering assembly 81 is configured to drive the carrying device 84 to move up and down, so that the carrying device 84 aligns with any storage unit on the storage shelf 82, or aligns with the shelf and/or the goods. The carrying device 84 may rotate by taking a vertical direction as axis to adjust an orientation to align with the storage unit, or align with the shelf and/or the goods. The carrying device 84 is configured to load or unload the goods, to carry the goods between the shelf and the storage unit.

For example, the storage shelf 82 may be selectively configured or not configured. When the storage shelf 82 is not configured, the robot 80 stores the goods in an accommodation space of the carrying device 84 during a period of carrying goods.

The robot 80 in the foregoing embodiment may perform the goods storage method provided in any embodiment of the present disclosure, to implement goods carrying between the shelf and an operating platform.

In a process in which the robot 80 performs a goods storage task, the robot 80 moves to a position of a specified storage space of the goods, and the robot 80 carries the goods from the storage unit of the storage shelf 82 to the shelf by using the carrying device 84 cooperating with the lifting/lowering assembly 81.

For example, FIG. 1G is a schematic structural diagram of a carrying device according to an embodiment shown in FIG. 1F of the present disclosure.

For example, the carrying device 84 is installed in a bracket 86 by using a rotation mechanism 85, and the rotation mechanism 85 is configured to drive the carrying device 84 to rotate about a vertical axis relative to the bracket 86, so as to align the storage unit or align the shelf and/or the goods. The carrying device 84 is configured to carry the goods between the storage unit and the shelf. If the carrying device 84 is not aligned with the shelf and/or the goods, the carrying device 84 may be rotated relative to the bracket 86 by using the rotation mechanism 85, so as to ensure that the carrying device 84 is aligned with the shelf and/or the goods.

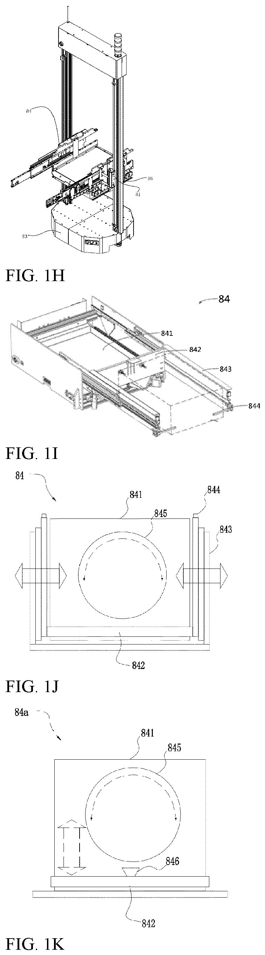

FIG. 1H is a structure of a robot and a carrying device according to an embodiment shown in FIG. 1F of the present disclosure. With reference to FIG. 1F and FIG. 1G, it may be understood that, according to an actual situation, the rotation mechanism 85 may be omitted. For example, the robot 80 moves in a fixed track, and after moving to the vicinity of the shelf, the carrying device 84 always aligns with the shelf and/or the goods, and the goods are disposed in a direction of picking up the goods by the carrying device 84.

For example, FIG. 1I is a schematic structural diagram of a carrying device in the embodiment shown in FIG. 1F of the present disclosure. For ease of understanding, refer to FIG. 1G together. As shown in FIG. 1I, the carrying device 84 includes a supporting plate 841 and a telescopic arm assembly. The supporting plate 841 is configured to place the goods, and may be a flat plate disposed horizontally. The telescopic arm assembly is configured to push the goods placed on the supporting plate 841 out of the supporting plate 841 or pull the goods to the supporting plate 841. The telescopic arm assembly includes a telescopic arm 843, a fixed push rod 842, and a movable push rod 844. The telescopic arm 843 includes a left telescopic arm and a right telescopic arm. The telescopic arm 843 may extend horizontally, and the telescopic arm 843 is located on one side of the supporting plate 841 in a direction perpendicular to an extension direction of the telescopic arm 843 and parallel to the supporting plate 841. The telescopic arm 843 is powered by a motor and transmitted by a sprocket mechanism. According to an actual situation, the sprocket mechanism may be replaced with a drive mechanism such as a belt pulley mechanism and a screw mechanism. Both the fixed push rod 842 and the movable push rod 844 are installed in the telescopic arm 843, and the fixed push rod 842 and the movable push rod 844 may extend along with the telescopic arm 843. The fixed push rod 842 and the supporting plate 841 are located on a same side of the telescopic arm 843. When the telescopic arm 843 extends, the fixed push rod 842 is configured to push the goods out of the supporting plate 841. The movable push rod 844 may be folded into the telescopic arm 843. When the movable push rod 844 is not folded into the telescopic arm 843, the movable push rod 844, the fixed push rod 842 and the supporting plate 841 are all located on a same side of the telescopic arm 843, and the movable push rod 844 is located in a extending direction of the fixed push rod 842 along the telescopic arm 843. The movable push rod 844 may be driven directly by a motor, or may be powered by using a transmission mechanism, such as a gear set or a linkage mechanism, according to an actual situation. When the movable push rod 844 is not folded into the telescopic arm and the telescopic arm 843 is retracted, the movable push rod 844 is configured to pull the goods to the supporting plate 841.

For example, the fixed push rod 842 of the carrying device 84 may be designed as a finger rod structure same with the movable push rod 844.

For example, the carrying device 84 may be designed as a structure in which a spacing width of the telescopic arm assembly is adjustable. The spacing width of the telescopic arm assembly may be adjusted according to the size of the goods when storing/retrieving the goods.

For example, the carrying device 84 may further include a steering structure, such as a turntable, and the steering structure may be configured to change the orientation of the goods placed on the supporting plate 841 of the carrying device 84. FIG. 1J is a schematic structural diagram of another carrying device according to an embodiment shown in FIG. 1F of the present disclosure. With reference to FIG. 1J and FIG. 1I, it may be learned that the carrying device 84 may further include a steering structure, that is, a turntable 845 in FIG. 1I, so as to change the orientation of the goods placed on the supporting plate 841 of the carrying device.

For example, FIG. 1K is a schematic structural diagram of another carrying device according to the embodiment shown in FIG. 1F of the present disclosure. A carrying device 84a includes one or more suction cups 846 that are disposed on a fixed push rod 842, and the fixed push rod 842 may be in a rod shape or a plate shape. When storing/retrieving goods, the fixed push rod 842 may be driven to move back and forth in a direction of the goods and/or shelf. The goods are absorbed by using the suction cup 846, and in cooperation with displacement of the fixed push rod 842, the goods are carried to the shelf or to a supporting plate 841.

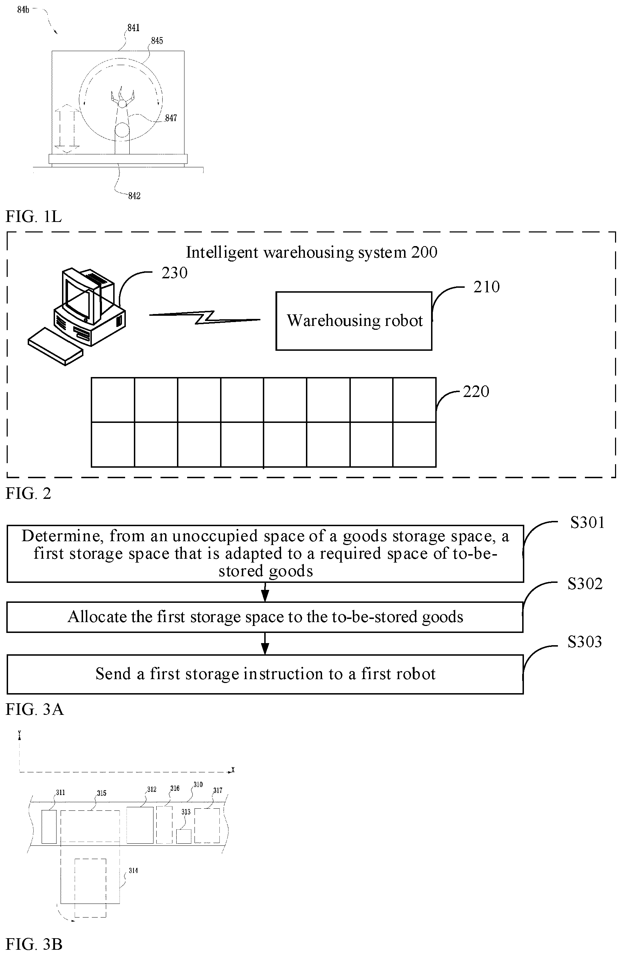

For example, FIG. 1L is a schematic structural diagram of another carrying device according to an embodiment shown in FIG. 1F of the present disclosure. A carrying device 84b includes one or more robotic arms 847 that are disposed in a proper position on a fixed push rod 842 and/or the carrying device 84b. When storing/retrieving goods, the fixed push rod 842 may be driven to move back and forth in a direction of the goods and/or shelf. The goods are grabbed/hooked by using the robotic arm 847, and in cooperation with displacement of the fixed push rod 842, the goods are carried to the shelf or to a supporting plate 841.

For example, the carrying device (84a, 84b) may further include a steering structure, such as the turntable 845 in FIG. 1J and FIG. 1K, so as to change the orientation of the goods placed on the supporting plate 841 of the carrying device.

The structure of the carrying device in the embodiments shown in the present disclosure may include one or a combination of the foregoing examples.

A beneficial effect is that, relative to a telescopic arm, a structure such as a suction cup and a robotic arm can reduce a safe spacing between goods, thereby improving density of goods on a shelf of a warehousing system, improving space utilization, and reducing warehousing costs.

FIG. 2 is an application scenario diagram of a space allocation method according to an embodiment of the present disclosure. As shown in FIG. 2, the space allocation method provided in this embodiment of the present disclosure may run on an electronic device, such as a computer or a server. An intelligent warehousing system 200 uses a warehousing robot 210 to retrieve and/or store a target box on a shelf 220, and uses a warehouse management device 230 to perform path planning of the warehousing robot 210 to, status monitoring of the warehousing robot, scheduling of the warehousing robot, and the like, so that the warehousing robot 210 moves to a specified position to retrieve and/or store the target box; and the warehouse management device 230 further stores storage information of each storage space of the shelf 220 and basic information of the target box, thereby facilitating warehouse management. When the warehouse management device 230 receives a inbound requirement of the box, the warehouse management device 230 allocates a proper storage space to the box according to a storage condition of the shelf 220, or the storage space of the box is manfully input, so that the warehousing robot 210 places the box in the storage space, so as to complete inbound of the box.

However, the storage space on the shelf 220 of the existing intelligent warehousing system 200 is a physical space of a fixed size and a fixed position, and each shelf 220 includes a fixed quantity of same-sized storage spaces. Therefore, a maximum quantity and a maximum size of boxes that can be stored in the shelf 220 are limited. In addition, when boxes are stored in same-sized static storage spaces, space utilization is relatively low, and storage costs are relatively high.

FIG. 3A is a flowchart of a space allocation method according to an embodiment of the present disclosure. As shown in FIG. 3A, the space allocation method may be performed by an electronic device in a warehousing system, such as a box inbound device and a warehouse management device. A specific form of the device may be a computer, a server, or the like. A box inbound method provided by this embodiment includes the following steps:

Step S301: Determine, from an unoccupied space of a goods storage space, a first storage space that is adapted to a required space of to-be-stored goods.

The to-be-stored goods are objects that need to be stored in a shelf of a warehousing system or a goods storage space of a warehouse. The to-be-stored goods may be in a form of a box or a package, may be goods that are provided by a user and that are not packaged by the warehousing system, or may be goods that are placed in a standard box provided by the warehousing system. A shape of the to-be-stored goods may be a regular shape, such as a rectangular shape or a square shape, or may be an irregular shape, for example, a surface includes a projection or a groove. The to-be-stored goods may be cloth, food, electronic products, building materials, or the like. The quantity, shape, type, and package of the to-be-stored goods are not limited in the present disclosure. The required space of the to-be-stored goods represents a space required for placing the to-be-stored goods.

For example, that the first storage space is adapted to the required space of the to-be-stored goods indicates that the first storage space is sufficient to accommodate the to-be-stored goods, or the first storage space is greater than or equal to the required space.

For example, the required space of the to-be-stored goods may be obtained first, and then the first storage space that is adapted to the required space is determined from the unoccupied space of the goods storage space.

For example, before the first storage space is determined, the required space of the to-be-stored goods may be obtained. The required space may be manually input into, or the required space of the to-be-stored goods is pre-stored, so as to directly read the stored required space of the to-be-stored goods. The warehousing system may alternatively automatically determine the required space of the to-be-stored goods. Specifically, the required space may be determined according to size information of the to-be-stored goods, and a safety spacing may be further considered, that is, the required space is determined according to the size information of the to-be-stored goods and a preset safety spacing.

The goods storage space may be a space that is on the shelf of the warehousing system and that is used to store the goods. The unoccupied space in the goods storage space refers to an idle space, and no object is placed on the unoccupied space. The unoccupied space may be a space of any size, and the unoccupied space does not include a divided fixed storage space. The divided fixed storage space refers to a preset storage space in the warehouse. The position of the fixed storage space is fixed and the size thereof is determined.

For example, a configuration manner of a shelf or a cache region corresponding to the goods storage space may be a one-dimensional configuration manner, or may be a two-dimensional configuration manner, or both a one-dimensional configuration manner and a two-dimensional configuration manner are included.

Optionally, the goods storage space includes a first unoccupied space and/or a first occupied space.

The first unoccupied space may be one of the foregoing unoccupied space, and the first occupied space is a space in which goods have been placed in a goods inbound/outbound direction.

Optionally, the goods storage space includes a second unoccupied space and/or a second occupied space.

The second occupied space may be a space in which goods cannot be stored. For example, most of the space is occupied by goods. The second unoccupied space includes a space that is not occupied by goods in the goods access direction, and the second unoccupied space may be one of the foregoing unoccupied space.

For example, when there is an unoccupied space in the goods storage space, the unoccupied space may be a space in which no goods are placed, or may be a space in which goods are placed in a part of the space and goods can still be placed in the remaining part. When the foregoing unoccupied space does not exist in the goods storage space, another operation may be performed first, or a waiting mode is entered. After a preset time elapses, it is again detected whether an unoccupied space exists in the goods storage space.

For example, the unoccupied space in the goods storage space may be detected in real time or regularly, or the unoccupied space in the goods storage space may be detected when there is a goods storage requirement, where the goods storage requirement includes information about to-be-stored goods, and may include identification information, a required space, and the like of the to-be-stored goods.

For example, each unoccupied space may be determined from the goods storage space of the warehousing system, and further, any unoccupied space whose space size is greater than or equal to the required space is determined as the first storage space.

For example, the determining, from an unoccupied space of a goods storage space, a first storage space that is adapted to a required space of to-be-stored goods includes:

querying, in the unoccupied space, a space greater than or equal to the required space; and determining a target space as the first storage space when it is found that the target space is greater than or equal to the required space.

For example, the queried first unoccupied space that is greater than or equal to the required space of the to-be-stored goods is determined as the first storage space, and not all unoccupied spaces need to be traversed. This shortens time required for determining the first storage space, improves efficiency of determining the first storage space, and further improves goods storage efficiency.

For example, to improve space utilization, the first storage space may be a minimum space in unoccupied spaces that are adapted to the required space.

For example, to improve space utilization and goods storage efficiency, the first storage space may further be a space with a highest space score in the unoccupied spaces that are adapted to the required space, where the space score may be determined according to one or more of a distance from a workstation, a distance from an alley entrance, a number of layer on a shelf, a space occupancy rate of the shelf, a continuous space occupancy rate of the shelf, and a space heat.

Optionally, the first robot includes a mobile chassis, a carrying device, a storage shelf, and a lifting/lowering assembly; and the storage shelf, the carrying device, and the lifting/lowering assembly are installed on the mobile chassis, to store the to-be-stored goods by using the storage shelf, so as to carry the to-be-stored goods to a position corresponding to the first storage space according to the first storage instruction.

Optionally, the carrying device includes one or more of the following: a telescopic arm assembly, a suction cup, and a robotic arm.

Optionally, the carrying device includes a supporting plate and a steering structure, and the steering structure is configured to change an orientation of goods placed on the supporting plate.

Step S302: Allocate the first storage space to the to-be-stored goods.

For example, after the first storage space is determined, a mapping relationship between the first storage space and the to-be-stored goods is established, so as to indicate that the first storage space is a storage space of the to-be-stored goods.

Step S303: Send a first storage instruction to a first robot.

The first storage instruction includes information about the first storage space. There may be one or more first robots.

For example, when a quantity of to-be-stored goods is multiple, a corresponding first storage space may be determined for each to-be-stored goods, and then corresponding to-be-stored goods are allocated to each first robot. One first robot may be corresponding to one to-be-stored goods, or may be corresponding to multiple to-be-stored goods, and the to-be-stored goods need to be determined according to a capability of the first robot and a working status of the warehousing system.

For example, the first storage instruction may be generated according to the information about the first storage space and the information about the to-be-stored goods, and the first storage instruction is sent to the first robot, so that the first robot places the to-be-stored goods in the corresponding first storage space.

Optionally, the determining, from an unoccupied space of a goods storage space, a first storage space that is adapted to a required space includes: determining, according to an unoccupied space in the goods storage space and the required space, a first storage space adapted to the required space from the unoccupied space and an orientation of the to-be-stored goods; and after the determining a first storage space, the method further includes: generating the first storage instruction according to the orientation of the to-be-stored goods and the information about the first storage space.

For a server, a space allocation apparatus, or a device in the warehousing system, the orientation of the to-be-stored goods refers to an orientation when the to-be-stored goods are placed on the space corresponding to the to-be-stored goods. For the robot, the information included in the first storage instruction may be an angle at which the to-be-stored goods placed on the robot need to be rotated, or an orientation at which the to-be-stored goods are placed in the corresponding space. When the robot places the to-be-stored goods, the robot needs an angle at which the to-be-stored goods need to be rotated, or both the foregoing two pieces of information, so that the to-be-stored goods may be placed in the corresponding space according to a preset orientation.

For example, when the first storage space is allocated to the to-be-stored goods, the orientation of the to-be-stored goods may be adjusted by using a carrying device of the robot, such as the carrying device in FIG. 1J. Therefore, the orientation may be comprehensively considered for determining the first storage space. The orientation of the to-be-stored goods may include a default orientation and an adjustment orientation which may be an orientation after the default orientation is rotated clockwise/counterclockwise. For example, the adjustment orientation may be an orientation corresponding to 90° or 270° after the default orientation is rotated clockwise/counterclockwise.

For example, a required space of each orientation may be generated according to the size information of the to-be-stored goods, and further, a first storage space adapted to a required space of one orientation is determined according to each unoccupied space and the required space of each orientation. The orientation of the required space is the orientation of the to-be-stored goods after storage.

For example, if the first storage space is adapted to required spaces of multiple orientations, the default orientation is selected as the orientation of the to-be-stored goods.

Further, after the first storage space that is adapted to the required space is determined from the unoccupied space according to each unoccupied space and the required space, the orientation of the to-be-stored goods may be determined according to the size information of the first storage space.

For example, FIG. 3B is a schematic diagram of a storage situation according to an embodiment of the present disclosure. As shown in FIG. 3B, a box 311 to a box 313 are placed on a shelf 310, and a box 314 is a to-be-stored box, that is, the foregoing to-be-stored goods. It can be learned from FIG. 3B that current unoccupied spaces of the shelf 310 include a space 315, a space 316, and a space 317, but only the space 315 meets a requirement. But the space 315 cannot store the box 314 in a default orientation (positive/negative) direction Y of the box 314. Therefore, the orientation of the box 314 may be changed, for example, rotated by 90° in a clockwise or counterclockwise direction to obtain the box 314 in an adjusted orientation (positive/negative) direction X, so that the box 314 is placed in the space 315 in the corresponding orientation (positive/negative) direction X.

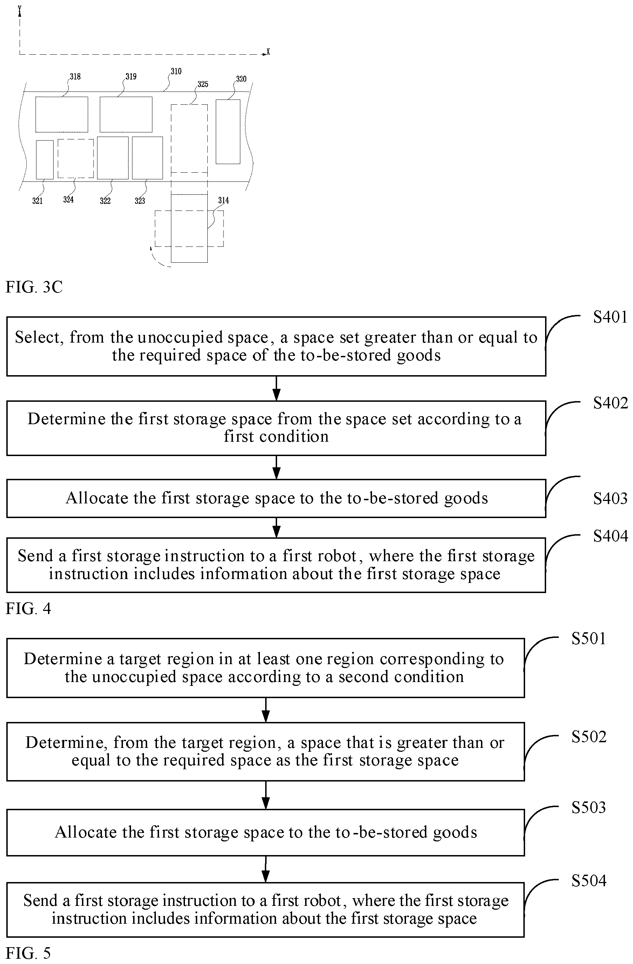

For example, FIG. 3C is a schematic diagram of a storage situation according to an embodiment of the present disclosure. As shown in FIG. 3C, a box 318 to a box 323 are placed on a shelf 310, and a box 314 is a to-be-stored box, that is, the foregoing to-be-stored goods. It can be learned from FIG. 3C that current unoccupied spaces of the shelf 310 include a space 324 and a space 325, but only the space 325 meets a requirement. But the space 325 cannot store the box 314 in a default orientation (positive/negative) direction X of the box 314. Therefore, the orientation of the box 314 may be changed, for example, rotated by 90° in a clockwise or counterclockwise direction to obtain the box 314 in an adjusted orientation (positive/negative) direction Y, so that the box 314 is placed in the space 325 in the corresponding orientation (positive/negative) direction Y.

In this embodiment, the unoccupied space adapted to the to-be-stored goods is determined from the goods storage space according to the required space of the to-be-stored goods, and the to-be-stored goods are stored in the determined unoccupied space, thereby implementing a concept of dynamically allocating a space to the goods, improving space utilization of a warehouse, reducing storage costs, and improving intelligence of the warehousing system.

FIG. 4 is a flowchart of a space allocation method according to another embodiment of the present disclosure. This embodiment is based on the embodiment shown in FIG. 3, and step S301 is further refined. As shown in FIG. 4, the space allocation method includes the following steps:

Step S401: Select, from the unoccupied space, a space set greater than or equal to the required space of the to-be-stored goods.

The to-be-stored goods may be goods placed on a storage unit of the robot.

For example, a space size of each unoccupied space may be determined or obtained, and each unoccupied space greater than or equal to the required space is determined according to the space size of the required space and the space size of each unoccupied space, so as to obtain the foregoing space set.

Step S402: Determine the first storage space from the space set according to a first condition.

The first condition includes: one or more of factors such as: a heat of the to-be-stored goods, size information of the to-be-stored goods, storage unit information of the to-be-stored goods on the first robot, position information of each space in the space set, a total area of a space occupied in a preset range of each space in the space set, a total area of an unoccupied space in the preset range of each space in the space set, a quantity of containers placed in the preset range of each space in the space set, and a quantity of spaces in the preset range of each space in the space set belong to the space set.

The preset range may be a two-dimensional range, or may be a three-dimensional range. The preset range may refer to a range that is on a same layer of a shelf with a space that is in the space set, for example, a range in the layer with a space distance of 5 meters between the layer and the space set. The preset range may alternatively be a range located at different layers of the shelf, for example, a range in the shelf with a space distance of 3 meters between the shelf and the space set. Certainly, the preset range may alternatively be another range, which is not limited in the present disclosure.

The heat of the to-be-stored goods is a parameter used to describe frequency at which the to-be-stored goods are taken out, and may be manually entered, or may be determined by the warehousing system according to historical order data.

For example, if the to-be-stored goods are clothes that are better sold, they need to be retrieved and stored once a day, and a heat corresponding to the to-be-stored goods may be 90 or 90%. If the to-be-stored goods are large articles, and are retrieved and stored once a week or even longer, the heat corresponding to the goods may be 30 or 30%. If the to-be-stored goods are goods that are retrieved at a specified time and will not be stored, the heat corresponding to the to-be-stored goods may be 0 or a lower value, such as 1, 3, 5, 1%, 3%, 5%, or another value.

For example, the heat of the to-be-stored goods may be determined according to a type of the to-be-stored goods. For example, when the to-be-stored goods are socks, the heat of the to-be-stored goods is 50, and when the to-be-stored goods are gold ornaments, the heat of the to-be-stored goods is 30.

For example, when the to-be-stored goods include multiple types of articles, the heat of the to-be-stored goods may be determined according to an article heat of each article. The heat of the to-be-stored goods may be determined according to one or more of a maximum value, a minimum value, an average value, a sum value, a weighted average value, or the like of the heat of each article.

For example, when the to-be-stored goods include an article A, an article B, and an article C, where a heat of the article A is 90, a heat of the article B is 50, and a heat of the article C is 40, the heat of the to-be-stored goods may be determined according to an average value of the three, that is, 60.

For example, the first storage space may be determined from the space set according to the heat of the to-be-stored goods, or the first storage space may be determined from the space set according to the heat of the to-be-stored goods and position information of each space. Certainly, the first storage space may also be determined in another combination manner of the foregoing factors of the first condition.

For example, a weight factor may be configured for each factor in the first condition, so as to obtain a weighted average value or a storage score corresponding to the first condition of each space in the space set, so as to determine the first storage space according to the weighted average value or the storage score. For example, a space with a highest weighted average value or a highest storage score in the space set is selected as the first storage space.

For example, if a space in the space set is at a position closer to an alley or a workstation, a storage score of the space in the space set is higher, a total area occupied thereby in the preset range is larger, and a storage score of the space in the space set is higher.

For example, a requirement condition of the to-be-stored goods may be determined according to one or more of the heat and size information of the to-be-stored goods and information about a storage unit on the first robot, where the requirement condition may include a requirement of the first storage space corresponding to the to-be-stored goods, and the requirement may specifically include: one or more of a range of a number of a layer on a shelf, a range of position information, a range of a total area of an occupied space in the preset range, a range of a total area of an unoccupied space in the preset range, a range of a quantity of spaces in the preset range that belong to the space set, or the like.

Considering the storage unit information of the to-be-stored goods and the position information of the space, a space closest to a working platform or an alley can be determined, thereby improving goods storage efficiency. Considering a condition within a preset space range, space utilization of the goods storage space can be improved, so as to optimize a warehousing manner and reduce warehousing costs. Considering the heat of the to-be-stored goods, goods with a relatively high access frequency can be placed in an easy to access position, thereby improving efficiency and intelligence of the warehousing system.

Step S403: Allocate the first storage space to the to-be-stored goods.

Step S404: Send a first storage instruction to a first robot, where the first storage instruction includes information about the first storage space.

In this embodiment, for each unoccupied space, a space set including unoccupied spaces meeting a requirement of a required space of to-be-stored goods is first determined according to the required space of the to-be-stored goods, and further, a first condition of the space set may include multiple factors, such as heat, size, position, and space occupation status. An optimal or most proper first storage space is determined from the space set, which is used as a storage space of the to-be-stored goods, thereby improving intelligence determined in the storage space, and improving goods storage efficiency and space utilization of a warehousing system.

FIG. 5 is a flowchart of a space allocation method according to another embodiment of the present disclosure. This embodiment is based on the embodiment shown in FIG. 3A, and step S301 is further refined. As shown in FIG. 5, the space allocation method includes the following steps:

Step S501: Determine a target region in at least one region corresponding to the unoccupied space according to a second condition.

The second condition includes: one or more factors such as: a heat of the to-be-stored goods, size information of the to-be-stored goods, storage unit information of the to-be-stored goods on a first robot, position information of each space in the unoccupied space, a quantity of containers placed in the at least one region, a total area of an occupied space in the at least one region, a total area of an unoccupied space in the at least one region, and a quantity of unoccupied spaces in the at least one region.

For example, the target region may be determined from the at least one region corresponding to the unoccupied space according to the heat of the to-be-stored goods. Alternatively, the target region is determined, according to the heat of the to-be-stored goods and the position information of each space in the unoccupied space, from the at least one region corresponding to the unoccupied space. Certainly, the target region may alternatively be determined in another combination manner of the foregoing factors of the second condition.

For example, a mapping relationship between each region of the goods storage space and the heat of the to-be-stored goods may be established in advance, and further, the target region is determined from the at least one region corresponding to the unoccupied space based on the mapping relationship and the heat of the to-be-stored goods.

For example, a weight factor may be configured for each factor in the second condition, so as to obtain a weighted average value or a region score of each region corresponding to the unoccupied space, so as to determine the target region according to the weighted average value or the region score, for example, select a region with a highest weighted average value or a highest region score as the target region.

For example, if a space in the space set is at a position closer to an alley or a workstation, a region score corresponding to the space in the space set is higher, the total area of the occupied space is larger, and the total area that is not occupied is smaller, and the storage score is higher.

Further, a requirement condition of the to-be-stored goods may be determined according to one or more of the heat and size information of the to-be-stored goods and information about a storage unit on the first robot, where the requirement condition may include a requirement of the storage region corresponding to the to-be-stored goods, and the requirement may specifically include: one or more of a range of space position information, a range of a total area of an occupied space in the region, a range of a total area of an unoccupied space in the region, a quantity of spaces not occupied in the region, or the like.

Step S502: Determine, from the target region, a space that is greater than or equal to the required space as the first storage space.

Step S503: Allocate the first storage space to the to-be-stored goods.

Step S504: Send a first storage instruction to a first robot, where the first storage instruction includes information about the first storage space.

In this embodiment, for each unoccupied space, each occupied space is first screened according to a second condition that includes multiple factors, such as heat, size, position, and occupation status, so as to determine a target region with relatively high access efficiency and high space utilization, and then select, from the target region, an unoccupied space that meets a requirement of to-be-stored goods as a storage space of the to-be-stored goods, thereby improving intelligence determined by the storage space, improving goods storage efficiency, and improving space utilization of a warehousing system.

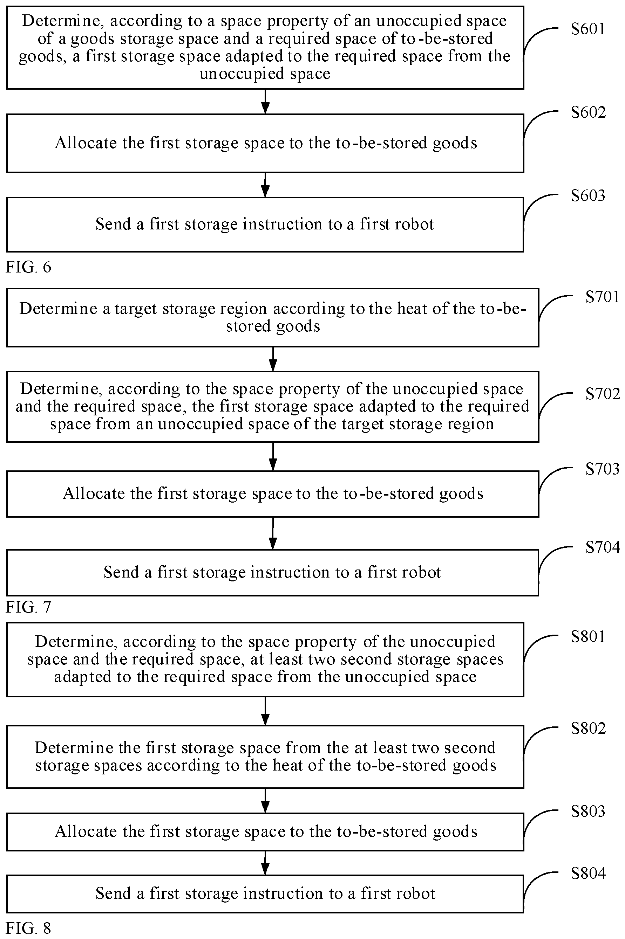

FIG. 6 is a flowchart of a space allocation method according to another embodiment of the present disclosure. This embodiment is based on FIG. 3A, and step S301 is further refined. As shown in FIG. 6, the space allocation method includes the following steps:
Step S601: Determine, according to a space property of an unoccupied space of a goods storage space and a required space of to-be-stored goods, a first storage space adapted to the required space from the unoccupied space.

The space property of the unoccupied space may include one or more of factors such as: a distance from a workstation, a distance from an alley entrance, a number of layer on a shelf, a space occupancy rate of the shelf, a continuous space occupancy rate of the shelf, and a space heat. The space heat may be a heat parameter configured by the warehousing system for each space, may be determined according to a heat of a region corresponding to the unoccupied space or a region in which a shelf is located, or may be determined by referring to a correlation between the unoccupied space and a corresponding region or a region in which the shelf is located.

For example, each unoccupied space that is in the goods storage space and that is adapted to the required space may be first determined, and further, the first storage space is determined, according to the space property, from the unoccupied space that is in the goods storage space and that is adapted to the required space.

For example, an unoccupied space that is closest to a workstation and that is corresponding to the required space is determined as the first storage space, or an unoccupied space that is closest to an alley entrance and that is corresponding to the required space is determined as the first storage space, or an unoccupied space that is located at the lowest number of layer on the shelf or that is at a specified number of layer on the shelf and that is corresponding to the required space is determined as the first storage space, or an unoccupied space that is corresponding to the highest or lowest space occupation rate of the shelf and that is corresponding to the required space is determined as the first storage space, or an unoccupied space that is corresponding to the highest or lowest continuous space occupation rate of the shelf and that is corresponding to the required space is determined as the first storage space. Certainly, two, three, four, or five of the foregoing factors of the space property may be selected to determine the first storage space.

A distance from a workstation, a distance from an alley entrance, and a number of layer on a shelf are considered as an example for description. It is assumed that weighted factors of the distance from the workstation, the distance from the alley entrance, and the number of layer on the shelf are respectively 0.5, 0.3, and 0.2. Further, weighted averages of the foregoing three factors are calculated to obtain a weighted average of space properties of unoccupied spaces, and the first storage space is determined according to the weighted average. Other cases may be learned by analogy, and details are not described herein again.

Optionally, the determining, according to a space property of an unoccupied space of a goods storage space and a required space of to-be-stored goods, a first storage space adapted to the required space from the unoccupied space includes: determining a space score of the unoccupied space according to the space property of the unoccupied space; and determining, according to the score of the unoccupied space and the required space, the first storage space adapted to the required space from the unoccupied space.

For example, when the distance between the unoccupied space and the workstation is closer, the space score of the unoccupied space is higher. When the distance between the unoccupied space and the alley entrance is closer, the space score of the unoccupied space is higher. When the distance between the unoccupied space and the workstation is closer, the space score of the unoccupied space is higher.

For example, a target unoccupied space that is adapted to the required space may be first determined from each unoccupied space according to the required space, and further, a space score of the target unoccupied space is calculated according to the space property, and the first storage space is determined from the target unoccupied space according to the space score of each target unoccupied space.

For example, the space score of each unoccupied space may be first calculated, and then the first storage space adapted to the required space may be determined according to the required space from unoccupied space whose space score meets a preset score condition, for example, is greater than a preset score threshold.

For example, the space score may be determined according to a value of each factor in the space property.

For example, it may be assumed that a full score of each item of the space property of the unoccupied space is 10 points, and a total score is 50 points. When the distance between the unoccupied space and the workstation is less than or equal to 10 meters, the score is 10 points, and a part that exceeds 10 meters may be deducted according to a corresponding mapping relationship, for example, 1 point is deducted for exceeding by every 5 meters. When the distance between the unoccupied space and the alley entrance is less than or equal to 2 meters, the score is 10 points. If the distance exceeds 2 meters, the score can be deducted according to a corresponding mapping relationship, for example, 1 point is deducted for exceeding by every 1 meter. The score of the number of layer on the shelf can be determined according to the total quantity of layers on the shelf and the number of layer on which the unoccupied space is located. For example, if the shelf includes six layers, the score of the lowest layer or the first layer is 10 points in full, 2 points are deducted for each layer higher, and the score of the third layer is 6 points.

When space utilization of the warehousing system needs to be maximized, the unoccupied space that has the highest space occupation rate of the shelf and that is adapted to the required space is preferably selected as the first storage space. When storage efficiency needs to be emphatically considered, an unoccupied space that has a smallest sum of a distance from the workstation and a distance from the alley entrance and that is adapted to the required space may be selected as the first storage space.

For example, when the first storage space is determined, the heat of the to-be-stored goods may be further considered. Optionally, the determining, according to a space property of an unoccupied space of a goods storage space and a required space of to-be-stored goods, a first storage space adapted to the required space from the unoccupied space includes:

determining, according to a heat of the to-be-stored goods, the space property of the unoccupied space, and the required space, the first storage space adapted to the required space from the unoccupied space.

For example, when the first storage space is determined, the heat of the to-be-stored goods may be considered comprehensively, and the first storage space that matches the heat of the to-be-stored goods may be determined, so that goods with a relatively high heat are placed in an easy to access position, thereby improving access efficiency of the warehousing system.

For example, the space property of the unoccupied space includes the space heat of the unoccupied space. The unoccupied space may be screened according to a matching result between the space heat of the unoccupied space and the heat of the to-be-stored goods, and further, the first storage space adapted to the required space is determined with reference to the required space. Alternatively, each unoccupied space that meets the required space may be first determined, and an unoccupied space whose space heat best matches the heat of the to-be-stored goods and that meets the required space is further determined from each unoccupied space as the first storage space according to a matching result between the space heat of the unoccupied space meeting the required space and the heat of the to-be-stored goods.

Step S602: Allocate the first storage space to the to-be-stored goods.

Step S603: Send a first storage instruction to a first robot.

The first storage instruction includes information about the first storage space.

For example, the determining, according to a space property of an unoccupied space of a goods storage space and a required space, a first storage space adapted to the required space from the unoccupied space includes: determining, according to the space property of the unoccupied space in the goods storage space and the required space, a first storage space adapted to the required space from the unoccupied space and an orientation of the to-be-stored goods; and generating the first storage instruction according to the orientation of the to-be-stored goods and the information about the first storage space.

For example, when the first storage space is allocated to the to-be-stored goods, the orientation of the to-be-stored goods may be adjusted by using a carrying device of the robot, such as the carrying device in FIG. 1G. Therefore, the orientation may be comprehensively considered for determining the first storage space. The orientation of the to-be-stored goods may include a default orientation and an adjustment orientation, which may be an orientation corresponding to the default orientation after 90°, 270°, or another angle of clockwise rotation.

For example, a required space of each orientation may be generated according to the size information of the to-be-stored goods, and further, a first storage space adapted to a required space of one orientation is determined according to a space property of each unoccupied space and the required space of each orientation. The orientation of the required space is the orientation of the to-be-stored goods.

For example, if the required space includes multiple different orientations, and there are multiple unoccupied spaces that can be adapted to the required space with the different orientations, the first storage space may be determined randomly, or according to one or more of the foregoing conditions of the space property, or according to an unoccupied space edge and/or angle, or near a surrounding object, or according to a related and/or similar condition by selecting a required space of an orientation.

For example, if the required space includes multiple different orientations, and there are multiple unoccupied spaces that can be adapted to the required space with the different orientations, the default orientation is selected as the orientation of the to-be-stored goods.

For example, after it is determined, from the unoccupied space according to the space property of each unoccupied space and the required space, the first storage space that is adapted to the required space, the orientation of the to-be-stored goods may be determined according to the orientation of the required space that is adapted to the first storage space.

In this embodiment, according to the required space of the to-be-stored goods and the space property of each unoccupied space in the goods storage space, the to-be-stored goods are placed in an unoccupied space that is adapted to the to-be-stored goods and that has good space performance, which is determined from the goods storage space. This implements a concept of dynamically allocating a space to goods, improves space utilization of a warehouse, reduces storage costs, and improves goods storage efficiency.

FIG. 7 is a flowchart of a space allocation method according to another embodiment of the present disclosure. This embodiment is based on FIG. 6, and step S601 is further refined. As shown in FIG. 7, the space allocation method includes the following steps:

Step S701: Determine a target storage region according to the heat of the to-be-stored goods.

For example, the heat of the to-be-stored goods may be described by using a value or a score, for example, 35 or 12, or may be described by using a level, for example, high, medium, or low.

For example, a mapping relationship between each storage region in the goods storage space and the heat may be established in advance, so as to determine the target storage region according to the heat of the to-be-stored goods and the mapping relationship.

For example, assuming that the goods storage space includes three storage regions, a region A, a region B, and a region C, and a heat corresponding to the region A is high, a heat corresponding to the region B is medium, a heat corresponding to the region C is low, and a heat corresponding to the to-be-stored goods is medium, the target storage region is determined as the region B.

Step S702: Determine, according to the space property of the unoccupied space and the required space, the first storage space adapted to the required space from an unoccupied space of the target storage region.

Step S702 is similar to a specific process in step S601, and only a range for determining the first storage space is modified to the unoccupied space corresponding to the target storage region. Details are not described herein again.

Step S703: Allocate the first storage space to the to-be-stored goods.

Step S704: Send a first storage instruction to a first robot.

The first storage instruction includes information about the first storage space.

In this embodiment, first, the goods storage space of the warehousing system is preliminarily screened according to the heat of the to-be-stored goods, to obtain the target storage region. Then, in the target storage region, the adapted first storage space is determined according to the space property of the unoccupied space and the required space of the to-be-stored goods, thereby accelerating efficiency of determining the first storage space, improving intelligence of goods storage and goods storage efficiency. In addition, space utilization of the warehousing system is improved in a dynamic space allocation manner, and storage costs are reduced.

FIG. 8 is a flowchart of a space allocation method according to another embodiment of the present disclosure. This embodiment is based on FIG. 6, and step S601 is further refined. As shown in FIG. 8, the space allocation method includes the following steps:

Step S801: Determine, according to the space property of the unoccupied space and the required space, at least two second storage spaces adapted to the required space from the unoccupied space.

For example, a specific process of determining the at least two second storage spaces is similar to a process of determining the first storage space in step S601, and only a quantity of determined spaces is modified to at least two. Details are not described herein again.

If there is only one second storage space, the second storage space may be directly determined as the first storage space, and subsequent steps are omitted.

Step S802: Determine the first storage space from the at least two second storage spaces according to the heat of the to-be-stored goods.

For example, the second storage space that matches the heat of the to-be-stored goods may be selected from the second storage spaces as the first storage space.

Further, a mapping relationship between a region corresponding to each storage space and the heat of the goods may be established in advance, and the first storage space is further determined from the at least two second storage spaces according to the heat of the to-be-stored goods and the mapping relationship.

For example, if the second storage spaces include a storage space S1 and a storage space S2, the heat of the to-be-stored goods is 86, a heat of goods that can be stored in the region corresponding to the storage space S1 is 60-80, and a heat of goods that can be stored in the region corresponding to the storage space S2 is 81-90, the first storage space is determined from the storage space S2.

Step S803: Allocate the first storage space to the to-be-stored goods.

Step S804: Send a first storage instruction to a first robot.

The first storage instruction includes information about the first storage space.

In this embodiment, first, the goods storage space of the warehousing system is preliminarily screened according to the space property of the unoccupied space and the required space of the to-be-stored goods, to obtain the at least two second storage spaces, and further, the matched first storage space is determined from the at least two second storage spaces according to the heat of the to-be-stored goods, thereby accelerating efficiency of determining the first storage space, improving intelligence of goods storage and improving goods storage efficiency. In addition, space utilization of the warehousing system is improved in a dynamic space allocation manner, and storage costs are reduced.

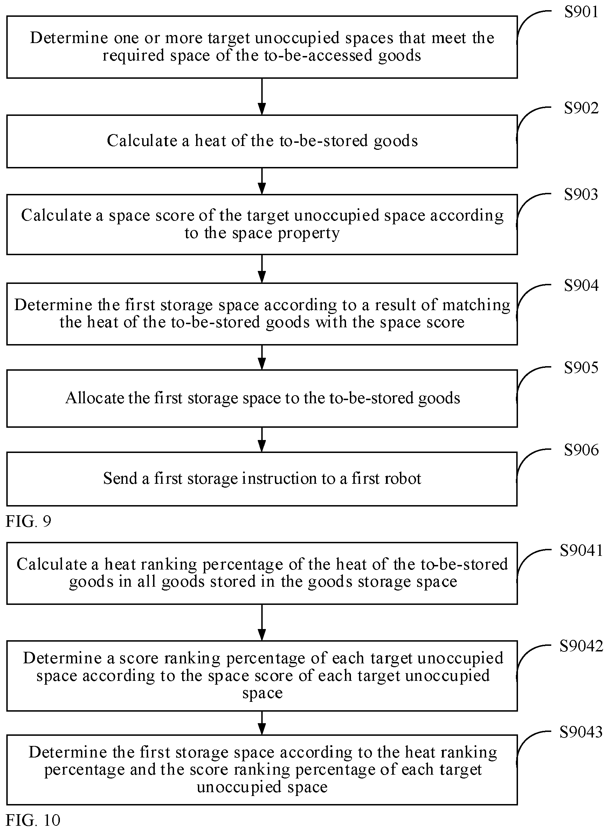

FIG. 9 is a flowchart of a space allocation method according to another embodiment of the present disclosure. This embodiment is based on FIG. 6, and step S601 is further refined. As shown in FIG. 9, the space allocation method includes the following steps:

Step S901: Determine one or more target unoccupied spaces that meet the required space of the to-be-accessed goods.

For example, the target unoccupied space may be an unoccupied space greater than or equal to the required space.

For example, each unoccupied space in the goods storage space may be first detected or obtained, and further, the target unoccupied space greater than or equal to the required space is determined from the unoccupied space according to size information of each unoccupied space and size information of the required space.

For example, if only one target unoccupied space is included, subsequent steps may be omitted, and the target unoccupied space is directly determined as the first storage space.

Step S902: Calculate a heat of the to-be-stored goods.

Step S903: Calculate a space score of the target unoccupied space according to the space property.

A manner of calculating the space score is the same as the foregoing manner, and details are not described herein again.

Step S904: Determine the first storage space according to a result of matching the heat of the to-be-stored goods with the space score.

For example, the target unoccupied space whose space score matches the heat of the to-be-stored goods may be selected, and the first storage space is determined according to the target unoccupied space.

Optionally, FIG. 10 is a flowchart of step S904 in the embodiment shown in FIG. 9 of the present disclosure. As shown in FIG. 10, step S904 includes:

Step S9041: Calculate a heat ranking percentage of the heat of the to-be-stored goods in all goods stored in the goods storage space.

The heat ranking percentage refers to a corresponding percentage of ranking of the heat of the to-be-stored goods in heats of all the goods stored in the goods storage space of the to-be-stored goods.

For example, the heats of all the goods currently stored in the goods storage space may be obtained, and the heat of the to-be-stored goods and the heats of all the goods may be used to determine ranking of the heat of the to-be-stored goods. Further, the heat ranking percentage of the to-be-stored goods is determined according to ranking of the heat of the to-be-stored goods and a quantity of all the goods stored in the goods storage space.

For example, an expression of the heat ranking percentage is:

$$H_d = \frac{R1}{M} \times 100\%$$

where $H_d$ is the heat ranking percentage of the to-be-stored goods; R 1 is the heat ranking of the to-be-stored goods; and M is the quantity of all the goods stored in the goods storage space.

For example, assuming that the goods storage space includes 100 goods, and the heat ranking of the to-be-stored goods is 29, the heat ranking percentage of the to-be-stored goods is 29%.

Step S9042: Determine a score ranking percentage of each target unoccupied space according to the space score of each target unoccupied space.

The score ranking percentage is a percentage corresponding to a ranking of a space score of the target unoccupied space.

For example, an expression of the score ranking percentage is:

$$ P_i = \frac{R2_i}{N} \times 100\% $$

where $P_i$ is a score ranking percentage of an ith target unoccupied space, $i = 1, \cdots, N$, and N is a quantity of target unoccupied spaces; and $R2_i$ is a score ranking of the ith target unoccupied space.

For example, it is assumed that 10 target unoccupied spaces are included, and the heat ranking of the ith target unoccupied space is 6, the heat ranking percentage of the target unoccupied space is 60%.

Step S9043: Determine the first storage space according to the heat ranking percentage and the score ranking percentage of each target unoccupied space.

For example, a correspondence between the heat ranking percentage and the score ranking percentage may be established in advance, and the first storage space is further determined according to the correspondence, the heat ranking percentage of the to-be-stored goods, and the score ranking percentage of each target unoccupied space.

Optionally, the determining the first storage space according to the heat ranking percentage and the score ranking percentage of each target unoccupied space includes:

determining the target unoccupied space whose score ranking percentage has the smallest absolute value of a difference from the heat ranking percentage as the first storage space.

For example, it is assumed that the heat ranking percentage of the to-be-stored goods is 39%, and the warehouse includes five target unoccupied spaces. Table 1 is a score ranking percentage table of each target unoccupied space provided in the embodiment of the present disclosure. It may be learned from Table 1 that a heat ranking percentage of a space D2 is the closest to that of a to-be-warehoused box. Therefore, the space D2 is determined as a storage space of the to-be-warehoused box.

Table 1 Score ranking percentage table of each target unoccupied space

| Space number | Score ranking percentage |
|---|---|
| D1 | 20% |
| D2 | 40% |
| D4 | 60% |
| D3 | 80% |
| D5 | 100% |

Step S905: Allocate the first storage space to the to-be-stored goods.

Step S906: Send a first storage instruction to a first robot.

The first storage instruction includes information about the first storage space.

In this embodiment, first, a target unoccupied space that can be used to store to-be-stored goods is determined according to a required space of the to-be-stored goods, and further, the target unoccupied space that matches a heat is determined as a first storage space that is used to store the to-be-stored goods according to a space score and the heat of the to-be-stored goods, thereby implementing a concept of dynamically allocating a space to goods and allocation of a storage space matching the heat of the to-be-stored goods, thereby improving rationality and intelligence of space allocation, placing goods with a relatively high heat in an easy to access space, and improving access efficiency of the warehousing system.

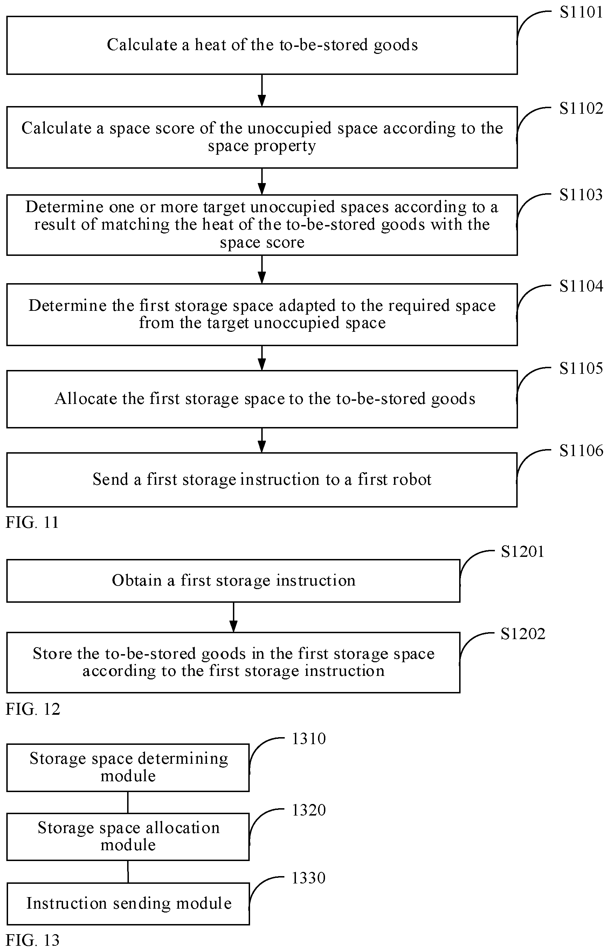

FIG. 11 is a flowchart of a space allocation method according to another embodiment of the present disclosure. This embodiment is based on FIG. 6, and step S601 is further refined. As shown in FIG. 11, the space allocation method includes the following steps:

Step S1101: Calculate a heat of the to-be-stored goods.

Step S1102: Calculate a space score of the unoccupied space according to the space property.

Step S1103: Determine one or more target unoccupied spaces according to a result of matching the heat of the to-be-stored goods with the space score.

A space score of the target unoccupied space matches the heat of the to-be-stored goods.

For example, when there is one target unoccupied space, the first storage space may be directly determined for the target unoccupied space, and subsequent steps are omitted.

Further, a matching mapping relationship between the heat of the goods and the space score may be established in advance, and then one or more target unoccupied spaces are determined according to the matching mapping relationship, the heat of the to-be-stored goods, and each space score.

Step S1104: Determine the first storage space adapted to the required space from the target unoccupied space.

Further, if the first storage space adapted to the required space is not found in the target unoccupied space, prompt information may be generated, so as to remind the user to intervene, or enter a waiting mode, so as to calculate a space score of a new unoccupied space when there is a new unoccupied space in the system, and re-determine the target unoccupied space, that is, return to step S1102.

Step S1105: Allocate the first storage space to the to-be-stored goods.

Step S1106: Send a first storage instruction to a first robot.

The first storage instruction includes information about the first storage space.

In this embodiment, first, each target unoccupied space that meets the heat requirement of the to-be-stored goods is determined according to the space score of the unoccupied space and the heat of the to-be-stored goods, and further, a space that meets the required space of the to-be-stored goods is selected from the target unoccupied space according to the required space of the to-be-stored goods, thereby implementing a concept of dynamically allocating a space to goods and allocation of a storage space matching the heat of the to-be-stored goods, thereby improving rationality and intelligence of space allocation, placing goods with a relatively high heat in an easy to access space, and improving access efficiency of the warehousing system.

For example, the heat of the to-be-stored goods involved in any embodiment of the present disclosure may be determined according to a type of the to-be-stored goods and/or an access frequency of the to-be-stored goods.

For example, a type heat corresponding to the type of the to-be-stored goods may be obtained, and the heat of the to-be-stored goods is further determined according to the type heat and/or the access frequency of the to-be-stored goods.

For example, a type score of the to-be-stored goods may be directly determined as the heat of the to-be-stored goods. Alternatively, the access frequency of the to-be-stored goods may be determined according to historical data, and further, the heat of the to-be-stored goods is determined according to the access frequency. Alternatively, the heat score of the to-be-stored goods may be determined according to the access frequency of the to-be-stored goods, and further, the heat of the to-be-stored goods is determined according to the type score and the heat score.

For example, the heat of the to-be-stored goods may be determined according to one or more of a sum, an average value, a maximum value, a minimum value, or a weighted average value of the type score and/or the heat score of the to-be-stored goods.

For example, assuming that the type score of the to-be-stored goods is 70, the heat score of the to-be-stored goods is 30, the weight of the type score is 0.6, and the weight of the heat score is 0.4, it is determined that the heat of the to-be-stored goods is $70 \times 0.6 + 30 \times 0.4 = 54$.

Optionally, when the to-be-stored goods are to-be-stored boxes, the to-be-stored boxes include at least two types of articles, and the heat of the to-be-stored goods is determined according to an article heat of each article of the to-be-stored box.

For example, the heat of the to-be-stored box may be determined according to one or more of a weighted average value, a maximum value, a minimum value, an average value, a maximum weight value, a minimum weight value, a set weight value, and an intermediate value that are of an article heat of each article of the to-be-stored box. The maximum weight value refers to an article heat corresponding to an article with a highest weight or a product of an article heat and a weight thereof, the minimum weight value refers to an article heat corresponding to an article with a lowest weight or a product of an article heat and a weight thereof, and the set weight value refers to an article heat corresponding to an article with a set weight such as the secondary maximum or the intermediate or a product of an article heat and a weight thereof.

Further, the heat of the to-be-stored box may be determined according to the article heat of each article of the to-be-stored box and the type heat corresponding to each article.

Further, when the heat of the to-be-stored box or the to-be-stored goods is determined, a quantity of the to-be-stored goods or articles in the to-be-stored goods may be considered comprehensively.

For example, it is assumed that an article a, an article b, and an article c are placed in the to-be-stored box, and article heats of the article a, the article b, and the article c are respectively: 70, 60, and 50, and weights of the article a, the article b, and the article c are respectively 0.5, 0.2, and 0.3. In this case, the heat of the to-be-stored box may be: $70 \times 0.5 + 60 \times 0.2 + 50 \times 0.3 = 62$. The heat of the to-be-stored box may alternatively be maximum values $70 \times 0.5 = 35$ in weight values of the articles.

It is assumed that type heats of the articles a, b, and c are respectively: 40, 70, and 30. A weight of the type heat is 05, and a weight of the article heat is 0.5. The heat of the to-be-stored box may alternatively be a weighted heat of an article with a highest article heat, that is, $70 \times 0.5 + 40 \times 0.5 = 55$. The heat of the to-be-stored box may alternatively be a maximum weighted heat, that is, $60 \times 0.5 + 70 \times 0.5 = 65$. The heat of the to-be-stored box may alternatively be an average value of weighted heats of all articles, that is, $(70 \times 0.5 + 40 \times 0.5 + 60 \times 0.5 + 70 \times 0.5 + 50 \times 0.5 + 30 \times 0.5)/3 = 53.33$. Assuming that quantities of the article a, the article b, and the article c are respectively 6, 9, and 5, the heat of the to-be-stored box may be (70×6+60×9+50×5)/20=60.5.

It should be noted that, the foregoing calculation manner of the heat is merely an example, and does not constitute a limitation on the present disclosure. Certainly, the heat of the to-be-stored goods may alternatively be calculated in another manner.

Optionally, before the determining a first storage space, the method further includes: performing standardization processing on the heat of the to-be-stored goods and the space score; and performing matching according to the heat of the to-be-stored goods and the space score after standardization processing, to obtain a matching result.

The standardization processing may be any normalization processing.

For example, the heat of the to-be-stored goods and each space score may be converted into data ranges with a same upper limit threshold and lower limit threshold, and further, the first storage space or the target unoccupied space may be determined according to the converted heat of the to-be-stored goods and a matching result of the space score.

FIG. 12 is a flowchart of a goods storage method according to an embodiment of the present disclosure. The goods storage method provided in this embodiment may be performed by a robot of a warehousing system. As shown in FIG. 12, the goods storage method includes the following steps:

Step S1201: Obtain a first storage instruction.

The first storage instruction includes information about a first storage space, the first storage space is a space allocated to to-be-stored goods, and the first storage space may be a space that is determined from an unoccupied space of a goods storage space and that is adapted to a required space of the to-be-stored goods.

The first storage space may be a space that is determined from the unoccupied space according to a space property of the unoccupied space of the goods storage space and the required space of the to-be-stored goods, and that is adapted to the required space.

Step S1202: Store the to-be-stored goods in the first storage space according to the first storage instruction.

FIG. 13 is a schematic structural diagram of a space allocation apparatus according to an embodiment of the present disclosure. As shown in FIG. 13, the space allocation apparatus includes: a storage space determining module 1310, a storage space allocation module 1320, and an instruction sending module 1330.

The storage space determining module 1310 is configured to determine, from an unoccupied space of a goods storage space, a first storage space that is adapted to a required space of to-be-stored goods; The storage space allocation module 1320 is configured to allocate the first storage space to the to-be-stored goods; and the instruction sending module 1330 is configured to send a first storage instruction to a first robot, where the first storage instruction includes information about the first storage space.

Optionally, the storage space determining module 1310 is specifically configured to:
determine, according to a space property of an unoccupied space of a goods storage space and a required space of to-be-stored goods, a first storage space adapted to the required space from the unoccupied space.

Optionally, the space allocation apparatus further includes:
a required space obtaining module, configured to obtain the required space of the to-be-stored goods.

Optionally, the storage space determining module 1310 is specifically configured to:
select, from the unoccupied space, a space set greater than or equal to the required space; and determine the first storage space from the space set according to a first condition.

Optionally, the storage space determining module 1310 is specifically configured to:
determine a target region in at least one region corresponding to the unoccupied space according to a second condition; and determine, from the target region, a space that is greater than or equal to the required space as the first storage space.

Optionally, the storage space determining module 1310 is specifically configured to:
query, in the unoccupied space, a space greater than or equal to the required space; and determine a target space as the first storage space when it is found that the target space is greater than or equal to the required space.

Optionally, the storage space determining module 1310 is specifically configured to:

determine, according to an unoccupied space in the goods storage space and the required space, a first storage space adapted to the required space from the unoccupied space and an orientation of the to-be-stored goods; and

correspondingly, the space allocation apparatus further includes:
an instruction generation module, configured to: after the first storage space is determined, generate the first storage instruction according to the orientation of the to-be-stored goods and the information about the first storage space.

Optionally, the storage space determining module 1310 is specifically configured to:
determine a space score of the unoccupied space according to the space property of the unoccupied space; and determine, according to the score of the unoccupied space and the required space, the first storage space adapted to the required space from the unoccupied space.

Optionally, the storage space determining module 1310 is specifically configured to:

determine, according to a heat of the to-be-stored goods, the space property of the unoccupied space, and the required space, the first storage space adapted to the required space from the unoccupied space.

Optionally, the storage space determining module 1310 is specifically configured to:

determine a target storage region according to the heat of the to-be-stored goods; and determine, according to the space property of the unoccupied space and the required space, the first storage space adapted to the required space from an unoccupied space of the target storage region.

Optionally, the storage space determining module 1310 is specifically configured to:

determine, according to the space property of the unoccupied space and the required space, at least two second storage spaces adapted to the required space from the unoccupied space; and determine the first storage space from the at least two second storage spaces according to the heat of the to-be-stored goods.

Optionally, the storage space determining module 1310 includes:

a requirement screening unit, configured to determine one or more target unoccupied spaces that meet the required space; a heat calculation unit, configured to calculate the heat of the to-be-stored goods; a score calculation unit, configured to calculate a space score of the target unoccupied space according to the space property; and a storage space determining unit, configured to determine the first storage space according to a result of matching the heat of the to-be-stored goods with the space score.

Optionally, the storage space determining unit includes:

a heat percentage calculation subunit, configured to calculate a heat ranking percentage of the heat of the to-be-stored goods in all goods stored in the goods storage space; a space percentage calculation subunit, configured to determine a score ranking percentage of each target unoccupied space according to the space score of each target unoccupied space; and a storage space determining subunit, configured to determine the first storage space according to the heat ranking percentage and the score ranking percentage of each target unoccupied space.

Optionally, the storage space determining subunit is specifically configured to:

determine the target unoccupied space whose score ranking percentage has the smallest absolute value of a difference from the heat ranking percentage as the first storage space.

Optionally, the storage space determining module 1310 is specifically configured to:

calculate the heat of the to-be-stored goods; calculate a space score of the unoccupied space according to the space property; determine one or more target unoccupied spaces according to a result of matching the heat of the to-be-stored goods with the space score; and determine the first storage space adapted to the required space from the target unoccupied space.

Optionally, the space allocation apparatus further includes:

a standardization processing module, configured to perform standardization processing on the heat of the to-be-stored goods and the space score; and perform matching according to the heat of the to-be-stored goods and the space score after standardization processing, to obtain a matching result.

Optionally, the storage space determining module 1310 is specifically configured to:

determine, according to the space property of the unoccupied space in the goods storage space and the required space, a first storage space adapted to the required space from the unoccupied space and an orientation of the to-be-stored goods.

The space allocation apparatus provided in this embodiment of the present disclosure may perform the space allocation method provided in any embodiment of the present disclosure, and has a corresponding function module and a beneficial effect of performing the method.

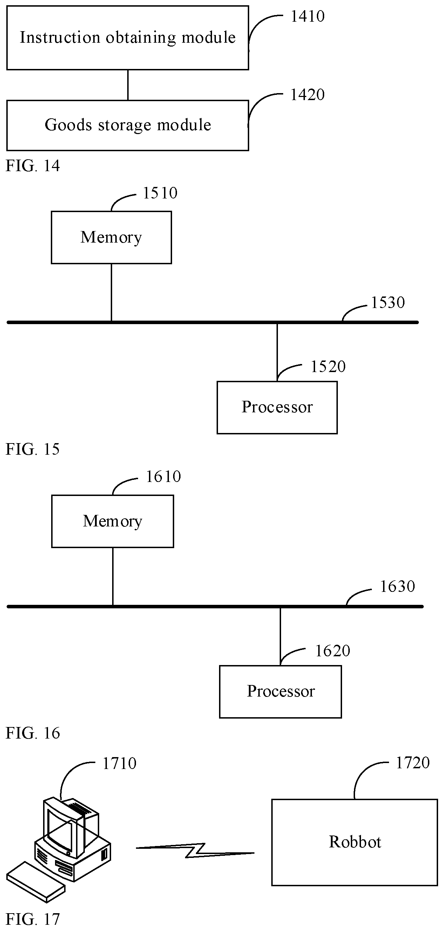

FIG. 14 is a schematic structural diagram of a goods storage apparatus according to an embodiment of the present disclosure. As shown in FIG. 14, the goods storage apparatus includes: an instruction obtaining module 1410 and a goods storage module 1420.

The instruction obtaining module 1410 is configured to obtain a first storage instruction, where the first storage instruction includes information about a first storage space, and the first storage space is a space that is determined from an unoccupied space of a goods storage space and that is adapted to a required space of to-be-stored goods. The goods storage module 1420 is configured to store the to-be-stored goods in the first storage space according to the first storage instruction.

FIG. 15 is a schematic structural diagram of a space allocation apparatus according to another embodiment of the present disclosure. The space allocation apparatus may be a computer or a server, and may be specifically a warehouse management device of a warehousing system. As shown in FIG. 15, the space allocation apparatus includes: a memory 1510, a processor 1520, and a computer program.

The computer program is stored in the memory 1510, and configured to be executed by the processor 1520 to implement the space allocation method provided in any one of the embodiments corresponding to FIG. 3 to FIG. 11 of the present disclosure.

The memory 1510 and the processor 1520 are connected through a bus 1530.

Related description can be understood with reference to the related illustration and effects corresponding to the steps in FIG. 3 to FIG. 11, and is not made here again.

FIG. 16 is a schematic structural diagram of a robot according to an embodiment of the present disclosure. As shown in FIG. 16, the robot includes: a memory 1610, a processor 1620, and a computer program.

The computer program is stored in the memory 1610, and configured to be executed by the processor 1620 to implement the goods storage method provided in the embodiment corresponding to FIG. 12 of the present disclosure.

The memory 1610 and the processor 1620 are connected through a bus 1630.

Related description can be understood with reference to the related illustration and effects corresponding to the steps in FIG. 12, and is not made here again.

Optionally, the robot may further include a mobile chassis, a carrying device, a storage shelf, and a lifting/lowering assembly; and the storage shelf, the carrying device, and the lifting/lowering assembly are installed on the mobile chassis, to store the to-be-stored goods by using the storage shelf, so as to carry the to-be-stored goods to a position corresponding to the first storage space according to the first storage instruction.

Optionally, the carrying device includes one or more of the following: a telescopic arm assembly, a suction cup, and a robotic arm.

Optionally, the carrying device includes a supporting plate and a steering structure, and the steering structure is configured to change an orientation of goods placed on the supporting plate.

FIG. 17 is a schematic structural diagram of a warehousing system according to an embodiment of the present disclosure. As shown in FIG. 17, the warehousing system includes: a space allocation device 1710 and a robot 1720.

The space allocation device 1710 may be the space allocation device provided in the embodiment corresponding to FIG. 15 of the present disclosure, and the robot 1720 may be the robot provided in the embodiment corresponding to FIG. 15 of the present disclosure.

An embodiment of the present disclosure provides a computer readable storage medium, on which a computer program is stored, and the computer program is executed by a processor to implement the space allocation method provided in any embodiment of the embodiments corresponding to FIG. 3 to FIG. 11 of the present disclosure, and/or implement the goods storage method provided in the embodiment corresponding to FIG. 12 of the present disclosure.

The computer readable storage medium can be a ROM, a random access memory (RAM), a CD-ROM, a magnetic tape, a floppy disk, an optical data storage device, or the like.

The present disclosure further provides a program product. The program product includes an executable computer program, and the executable computer program is stored in a readable storage medium. At least one processor of a robot or a warehousing system may read the computer program from the readable storage medium. The at least one processor executes the computer program, so that a robot grouping control apparatus implements the space allocation method and/or the goods storage method provided in the foregoing various implementations.

It is to be understood that the disclosed device and method in the embodiments provided in the present disclosure may be implemented by means of other modes. For example, the described device embodiment is merely exemplary. For example, the module division is merely logical function division and may be other division in actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical units, that is, may be located in one position, or may be distributed on a plurality of network units. Some or all of the modules may be selected according to actual needs to achieve the objectives of the solutions of the embodiments.

In addition, function modules in the embodiments of the present disclosure may be integrated into one processing unit, or each of the modules may exist alone physically, or two or more modules are integrated into one unit. The integrated unit may be implemented in a form of hardware, or may be implemented in a form of hardware in addition to a software functional unit.

When the foregoing integrated module is implemented in a form of a software functional module, the integrated unit may be stored in a computer-readable storage medium. The foregoing software function module is stored in a storage medium and includes several instructions to enable a computer device (which may be a personal computer, a server, or a network device) or a processor (processor) to perform some of the steps of the methods described in the embodiments of the present disclosure.

It should be understood that the processor may be a central processing unit (Central Processing Unit, CPU for short), or may be another general-purpose processor, a digital signal processor (Digital Signal Processor, DSP for short), an application specific integrated circuit (Application Specific Integrated Circuit, ASIC for short), or the like. The general-purpose processor may be a microprocessor, or the processor may be any conventional processor or the like. The steps of the method disclosed with reference to the present invention may be directly performed by a hardware processor, or may be performed by using a combination of hardware in the processor and a software module.

The memory may include a high-speed RAM memory, or may further include a non-volatile memory NVM, for example, at least one magnetic disk memory, or may be a USB flash drive, a removable hard disk, a read-only memory, a magnetic disk, or an optical disc.

The bus may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus may be classified into an address bus, a data bus, a control bus, and the like. For ease of representation, the bus in the accompanying drawings of the present disclosure is not limited to only one bus or only one type of bus.

The storage medium may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc. The storage medium may be any available medium accessible to a general-purpose or dedicated computer.

For example, a storage medium is coupled to a processor, so that the processor can read information from the storage medium or write information into the storage medium. Certainly, the storage medium may be a component of the processor. The processor and the storage medium may be located in an application specific integrated circuit (Application Specific Integrated Circuit, ASIC for short). Certainly, the processor and the storage medium may exist in an electronic device or a main control device as discrete components.

Persons of ordinary skill in the art may understand that All or some of the steps of the foregoing method embodiments may be implemented by using hardware related to a program instruction. The program may be stored in a computer-readable storage medium. When the program is executed, steps of the foregoing method embodiments are performed. The foregoing storage medium includes: any medium that can store program code, such as a ROM, a RAM, a magnetic disk, or an optical disc.

Finally, it should be noted that: The foregoing embodiments are merely intended for describing the technical solutions of the present disclosure other than limiting the present disclosure. Although the present disclosure is described in detail with reference to the foregoing embodiments, it should be appreciated by a person skilled in the art that, modifications may still be made to the technical solutions described in the foregoing embodiments, or equivalent replacements may be made to a part or all of the technical features; and these modifications or replacements will not cause the essence of corresponding technical solutions to depart from the scope of the technical solutions in the embodiments of the present disclosure.

**Claims**

1. A space allocation method, comprising:

   determining, according to a space property of an unoccupied space of a goods storage space and a required space of to-be-stored goods, a first storage space adapted to the required space from the unoccupied space;
   allocating the first storage space to the to-be-stored goods; and
   sending a first storage instruction to a first robot, wherein the first storage instruction comprises information about the first storage space.

2. The method according to claim 1, wherein: the space property comprises one or more of the following: a distance from a workstation, a distance from an alley entrance, a number of a layer on a shelf, a space occupancy rate of the shelf, a continuous space occupancy rate of the shelf, and a space heat.

3. The method according to claim 1 or 2, wherein: the determining, according to a space property of an unoccupied space of a goods storage space and a required space of to-be-stored goods, a first storage space adapted to the required space from the unoccupied space comprises:

   determining a space score of the unoccupied space according to the space property of the unoccupied space; and
   determining, according to the score of the unoccupied space and the required space, the first storage space adapted to the required space from the unoccupied space.

4. The method according to claim 1 or 2, wherein: the determining, according to a space property of an unoccupied space of a goods storage space and a required space of to-be-stored goods, a first storage space adapted to the required space from the unoccupied space comprises:
   determining, according to a heat of the to-be-stored goods, the space property of the unoccupied space, and the required space, the first storage space adapted to the required space from the unoccupied space.

5. The method according to claim 4, wherein: the determining, according to a heat of the to-be-stored goods, the space property of the unoccupied space, and the required space, the first storage space adapted to the required space from the unoccupied space comprises:

   determining a target storage region according to the heat of the to-be-stored goods; and

determining, according to the space property of the unoccupied space and the required space, the first storage space adapted to the required space from an unoccupied space of the target storage region.

6. The method according to claim 4, wherein: the determining, according to a heat of the to-be-stored goods, the space property of the unoccupied space, and the required space, the first storage space adapted to the required space from the unoccupied space comprises:

   determining, according to the space property of the unoccupied space and the required space, at least two second storage spaces adapted to the required space from the unoccupied space; and
   determining the first storage space from the at least two second storage spaces according to the heat of the to-be-stored goods.

7. The method according to claim 4, wherein: the determining, according to a heat of the to-be-stored goods, the space property of the unoccupied space, and the required space, the first storage space adapted to the required space from the unoccupied space comprises:

   determining one or more target unoccupied spaces that meet the required space;
   calculating the heat of the to-be-stored goods;
   calculating a space score of the target unoccupied space according to the space property; and
   determining the first storage space according to a result of matching the heat of the to-be-stored goods with the space score.

8. The method according to claim 7, wherein: the determining the first storage space according to a result of matching the heat of the to-be-stored goods with the space score comprises:

   calculating a heat ranking percentage of the heat of the to-be-stored goods in all goods stored in the goods storage space;
   determining a score ranking percentage of each target unoccupied space according to the space score of each target unoccupied space; and
   determining the first storage space according to the heat ranking percentage and the score ranking percentage of each target unoccupied space.

9. The method according to claim 8, wherein: the determining the first storage space according to the heat ranking percentage and the score ranking percentage of each target unoccupied space comprises:
determining the target unoccupied space whose score ranking percentage has the smallest absolute value of a difference from the heat ranking percentage as the first storage space.

10. The method according to claim 4, wherein: the determining, according to a heat of the to-be-stored goods, the space property of the unoccupied space, and the required space, the first storage space adapted to the required space from the unoccupied space comprises:

    calculating the heat of the to-be-stored goods;
    calculating a space score of the unoccupied space according to the space property;
    determining one or more target unoccupied spaces according to a result of matching the heat of the to-be-stored goods with the space score; and
    determining the first storage space adapted to the required space from the target unoccupied space.

11. The method according to any one of claims 4 to 10, wherein: the heat of the to-be-stored goods is determined according to a type of the to-be-stored goods and/or an access frequency of the to-be-stored goods.

12. The method according to any one of claims 4 to 11, wherein: the to-be-stored goods are a to-be-stored box, the to-be-stored box comprises at least two types of articles, and the heat of the to-be-stored goods is determined according to an article heat of each article of the to-be-stored box.

13. The method according to any one of claims 7 to 12, wherein: before the determining a first storage space, the method further comprises:

    performing standardization processing on the heat of the to-be-stored goods and the space score; and
    performing matching according to the heat of the to-be-stored goods and the space score after standardization processing, to obtain a matching result.

14. The method according to any one of claims 1 to 13, wherein: the goods storage space comprises a first unoccupied space and/or a first occupied space, and the first occupied space is a space in which goods have been placed in a goods access direction.

15. The method according to any one of claims 1 to 13, wherein: the goods storage space comprises a second unoccupied space and/or a second occupied space; and the second unoccupied space comprises a space that is not occupied by goods in a goods access direction.

16. The method according to claim 1, wherein: the determining, according to a space property of an unoccupied space of a goods storage space and a required space, a first storage space adapted to the required space from the unoccupied space comprises:

    determining, according to the space property of the unoccupied space in the goods storage space and the required space, a first storage space adapted to the required space from the unoccupied space and an orientation of the to-be-stored goods; and
    after the determining a first storage space and an orientation of the to-be-stored goods, the method further comprises:
    generating the first storage instruction according to the orientation of the to-be-stored goods and the information about the first storage space.

17. The method according to any one of claims 1 to 16, wherein: the first robot comprises a mobile chassis, a carrying device, a storage shelf, and a lifting/lowering assembly; and the storage shelf, the carrying device, and the lifting/lowering assembly are installed on the mobile chassis, to store the to-be-stored goods by using the storage shelf, so as to carry the to-be-stored goods to a position corresponding to the first storage space according to the first storage instruction.

18. The method according to claim 17, wherein: the carrying device comprises one or more of the following: a telescopic arm assembly, a suction cup, and a robotic arm.

19. The method according to claim 17 or 18, wherein: the carrying device comprises a supporting plate and a steering structure, and the steering structure is configured to change an orientation of goods placed on the supporting plate.

20. A goods storage method, comprising:

    obtaining a first storage instruction, wherein the first storage instruction comprises information about a first storage space, the first storage space is a space allocated to to-be-stored goods, and the first storage space is a space that is determined, according to a space property of an unoccupied space of a goods storage space and a required space of the to-be-stored goods, from the unoccupied space and that is adapted to the required space; and

    storing the to-be-stored goods in the first storage space according to the first storage instruction.

21. A space allocation apparatus, comprising:

    a storage space determining module, configured to determine, according to a space property of an unoccupied space of a goods storage space and a required space of to-be-stored goods, a first storage space adapted to the required space from the unoccupied space;
    a storage space allocation module, configured to allocate the first storage space to the to-be-stored goods; and
    a storage instruction sending module, configured to send a first storage instruction to a first robot, wherein the first storage instruction comprises information about the first storage space.

22. A goods storage apparatus, comprising:

    a storage instruction obtaining module, configured to obtain a first storage instruction, wherein the first storage instruction comprises information about a first storage space, the first storage space is a space allocated to to-be-stored goods, and the first storage space is a space that is determined, according to a space property of an unoccupied space of a goods storage space and a required space of the to-be-stored goods, from the unoccupied space and that is adapted to the required space; and
    a goods storage module, configured to store the to-be-stored goods in the first storage space according to the first storage instruction.

23. A goods storage apparatus, comprising: a memory and at least one processor; wherein

    the memory stores computer executable instructions; and
    the at least one processor executes the computer executable instructions stored in the memory, so that the at least one processor performs the space allocation method according to any one of claims 1 to 19.

24. A robot, comprising: a memory and at least one processor; wherein

    the memory stores computer executable instructions; and
    the at least one processor executes the computer executable instructions stored in the memory, so that the at least one processor performs the goods storage method according to claim 20.

25. The robot according to claim 24, wherein the robot comprises a mobile chassis, a carrying device, a storage shelf, and a lifting/lowering assembly; and the storage shelf, the carrying device, and the lifting/lowering assembly are installed on the mobile chassis.

26. The robot according to claim 25, wherein: the carrying device comprises one or more of the following: a telescopic arm assembly, a suction cup, and a robotic arm.

27. The robot according to claim 25 or 26, wherein: the carrying device comprises a supporting plate and a steering structure, and the steering structure is configured to change an orientation of goods placed on the supporting plate.

28. A warehousing system, comprising: the goods storage apparatus according to claim 23 and/or the robot according to any one of claims 24 to 27.

29. A computer readable storage medium, wherein: the computer readable storage medium stores computer executable instructions; and when executing the computer executable instructions, the processor implements the space allocation method according to any one of claims 1 to 19, and/or implements the goods storage method according to claim 20.

30. A computer program product, comprising a computer program, wherein: when the computer program is executed by a processor, the space allocation method according to any one of claims 1 to 19 is implemented, or the goods storage method according to claim 20 is implemented.

FIG. 1A

FIG. 1B

FIG. 1C

FIG. 1D

FIG. 1E

FIG. 1F

FIG. 1G

FIG. 1H

FIG. 1I

FIG. 1J

FIG. 1K

FIG. 1L

Intelligent warehousing system 200

230

210

Warehousing robot

220

FIG. 2

| | |
|---|---|
| Determine, from an unoccupied space of a goods storage space, a first storage space that is adapted to a required space of to-be-stored goods | S301 |
| Allocate the first storage space to the to-be-stored goods | S302 |
| Send a first storage instruction to a first robot | S303 |

FIG. 3A

FIG. 3B

FIG. 3C

FIG. 4

| | |
|---|---|
| Select, from the unoccupied space, a space set greater than or equal to the required space of the to-be-stored goods | S401 |
| Determine the first storage space from the space set according to a first condition | S402 |
| Allocate the first storage space to the to-be-stored goods | S403 |
| Send a first storage instruction to a first robot, where the first storage instruction includes information about the first storage space | S404 |

FIG. 5

| | |
|---|---|
| Determine a target region in at least one region corresponding to the unoccupied space according to a second condition | S501 |
| Determine, from the target region, a space that is greater than or equal to the required space as the first storage space | S502 |
| Allocate the first storage space to the to-be-stored goods | S503 |
| Send a first storage instruction to a first robot, where the first storage instruction includes information about the first storage space | S504 |

Determine, according to a space property of an unoccupied space of a goods storage space and a required space of to-be-stored goods, a first storage space adapted to the required space from the unoccupied space — S601

Allocate the first storage space to the to-be-stored goods — S602

Send a first storage instruction to a first robot — S603

FIG. 6

Determine a target storage region according to the heat of the to-be-stored goods — S701

Determine, according to the space property of the unoccupied space and the required space, the first storage space adapted to the required space from an unoccupied space of the target storage region — S702

Allocate the first storage space to the to-be-stored goods — S703

Send a first storage instruction to a first robot — S704

FIG. 7

Determine, according to the space property of the unoccupied space and the required space, at least two second storage spaces adapted to the required space from the unoccupied space — S801

Determine the first storage space from the at least two second storage spaces according to the heat of the to-be-stored goods — S802

Allocate the first storage space to the to-be-stored goods — S803

Send a first storage instruction to a first robot — S804

FIG. 8

Determine one or more target unoccupied spaces that meet the
required space of the to-be-accessed goods — S901

Calculate a heat of the to-be-stored goods — S902

Calculate a space score of the target unoccupied space according
to the space property — S903

Determine the first storage space according to a result of matching
the heat of the to-be-stored goods with the space score — S904

Allocate the first storage space to the to-be-stored goods — S905

Send a first storage instruction to a first robot — S906

FIG. 9

Calculate a heat ranking percentage of the heat of the to-be-stored
goods in all goods stored in the goods storage space — S9041

Determine a score ranking percentage of each target unoccupied
space according to the space score of each target unoccupied
space — S9042

Determine the first storage space according to the heat ranking
percentage and the score ranking percentage of each target
unoccupied space — S9043

FIG. 10

S1101

Calculate a heat of the to-be-stored goods

S1102

Calculate a space score of the unoccupied space according to the space property

S1103

Determine one or more target unoccupied spaces according to a result of matching the heat of the to-be-stored goods with the space score

S1104

Determine the first storage space adapted to the required space from the target unoccupied space

S1105

Allocate the first storage space to the to-be-stored goods

S1106

Send a first storage instruction to a first robot

FIG. 11

S1201

Obtain a first storage instruction

S1202

Store the to-be-stored goods in the first storage space according to the first storage instruction

FIG. 12

Storage space determining module — 1310

Storage space allocation module — 1320

Instruction sending module — 1330

FIG. 13

Instruction obtaining module — 1410

Goods storage module — 1420

FIG. 14

— 1510
Memory

— 1530

— 1520
Processor

FIG. 15

— 1610
Memory

— 1630

— 1620
Processor

FIG. 16

— 1710

— 1720
Robbot

FIG. 17

## INTERNATIONAL SEARCH REPORT

| International application No. |
| --- |
| **PCT/CN2021/129699** |

**A. CLASSIFICATION OF SUBJECT MATTER**

B65G 1/04(2006.01)i; B65G 1/137(2006.01)i; B65G 1/14(2006.01)i

According to International Patent Classification (IPC) or to both national classification and IPC

**B. FIELDS SEARCHED**

Minimum documentation searched (classification system followed by classification symbols)

B65G

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 空间, 分配, 空余, 空位, 存放, 存储, 热度, 机器人, 搬运, space, deposit, store, robot, carry, transport+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 112407724 A (HAI ROBOTICS CO., LTD.) 26 February 2021 (2021-02-26) description paragraphs [0004]-[0350], figures 1A-17 | 1-30 |
| PX | CN 112407725 A (HAI ROBOTICS CO., LTD.) 26 February 2021 (2021-02-26) description paragraphs [0004]-[0325], figures 1A-17 | 1-30 |
| PX | CN 112407727 A (HAI ROBOTICS CO., LTD.) 26 February 2021 (2021-02-26) description, paragraphs [0005]-[0211], figures 1A-8 | 1-30 |
| PX | CN 112407728 A (HAI ROBOTICS CO., LTD.) 26 February 2021 (2021-02-26) description paragraphs [0004]-[0336], figures 1A-17 | 1-30 |
| X | CN 111832803 A (BEIJING ARESBOTS ROBOT TECHNOLOGY CO., LTD.) 27 October 2020 (2020-10-27) description, paragraphs [0005]-[0187], and figures 1-8 | 1-16, 20-24, 28-30 |
| Y | CN 111832803 A (BEIJING ARESBOTS ROBOT TECHNOLOGY CO., LTD.) 27 October 2020 (2020-10-27) description, paragraphs [0005]-[0187], and figures 1-8 | 17-19, 23, 25-30 |
| Y | CN 211197464 U (HAI ROBOTICS CO., LTD.) 07 August 2020 (2020-08-07) description, paragraphs [0031]-[0065], and figures 1-9 | 17-19, 23, 25-30 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 January 2022** | **28 January 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/129699**

**C.      DOCUMENTS CONSIDERED TO BE RELEVANT**

| Category* | Citation of document, with indication, where appropriate, of the relevant passages | Relevant to claim No. |
|---|---|---|
| X | CN 110525855 A (BEIJING SCIENCE AND TECHNOLOGY CO., THREE FAST ONLINE) 03 December 2019 (2019-12-03) description, paragraphs [0006]-[0200], and figures 1-6 | 1-30 |
| X | CN 111792249 A (BEIJING JINGDONG GANSHI TECHNOLOGY CO., LTD.) 20 October 2020 (2020-10-20) description, paragraphs [0005]-[0137], and figures 1-12 | 1-30 |
| A | EP 0063354 A1 (BERKEL PATENT NV) 27 October 1982 (1982-10-27) entire document | 1-30 |

Form PCT/ISA/210 (second sheet) (January 2015)

**INTERNATIONAL SEARCH REPORT**
**Information on patent family members**

| | International application No. |
|---|---|
| | **PCT/CN2021/129699** |

| Patent document cited in search report | | | Publication date (day/month/year) | Patent family member(s) | | | Publication date (day/month/year) |
|---|---|---|---|---|---|---|---|
| CN | 112407724 | A | 26 February 2021 | None | | | |
| CN | 112407725 | A | 26 February 2021 | None | | | |
| CN | 112407727 | A | 26 February 2021 | None | | | |
| CN | 112407728 | A | 26 February 2021 | None | | | |
| CN | 111832803 | A | 27 October 2020 | None | | | |
| CN | 211197464 | U | 07 August 2020 | WO | 2021098782 | A1 | 27 May 2021 |
| CN | 110525855 | A | 03 December 2019 | CN | 110525855 | B | 26 March 2021 |
| CN | 111792249 | A | 20 October 2020 | None | | | |
| EP | 0063354 | A1 | 27 October 1982 | DE | 3115191 | A1 | 11 November 1982 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011312567